(19) Europäisches Patentamt / European Patent Office / Office européen des brevets

(11) **EP 1 791 313 B1**

(12) **EUROPEAN PATENT SPECIFICATION**

(45) Date of publication and mention
of the grant of the patent:
**20.08.2008   Bulletin 2008/34**

(51) Int Cl.:
***H04L 27/26*** (2006.01)

(21) Application number: **05256600.7**

(22) Date of filing: **25.10.2005**

(54) **Communications systems and methods using selected mapping for OFDM signals**

Kommunikationssysteme und -verfahren mit Selected Mapping (SLM)-Technik für OFDM Signale

Systèmes et procédés de communication utilisant le mappage selectionné pour signaux OFDM

(84) Designated Contracting States:
**DE FR GB IT**

(43) Date of publication of application:
**30.05.2007   Bulletin 2007/22**

(73) Proprietor: **Fujitsu Ltd.**
**Kawasaki-shi, Kanagawa 211-8588 (JP)**

(72) Inventor: **Abedi, Saied**
**Reading,**
**Berkshire RG1 4LY (GB)**

(74) Representative: **Hitching, Peter Matthew et al**
**Haseltine Lake**
**Lincoln House**
**300 High Holborn**
**London WC1V 7JH (GB)**

(56) References cited:
- **BAXLEY R J ET AL: "Ordered phase sequence testing in SLM for improved blind detection" THE SIXTH IEEE INTERNATIONAL WORKSHOP ON SIGNAL PROCESSING ADVANCES IN WIRELESS COMMUNICATIONS 5-8 JUNE 2005 NEW YORK, NY, USA, 5 June 2005 (2005-06-05), pages 256-259, XP002371930**
- **YOO J-J ET AL: "PMEPR ANALYSIS FOR OFDM SIGNALS USING DECIMATED SELECTIVE MAPPING" IEICE TRANSACTIONS ON COMMUNICATIONS, COMMUNICATIONS SOCIETY, TOKYO, JP, vol. E87-B, no. 6, June 2004 (2004-06), pages 1719-1723, XP001199087 ISSN: 0916-8516**
- **JAYALATH A D S ET AL: "A blind slm receiver for par-reduced ofdm" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, vol. VOL. 1 OF 4. CONF. 56, 24 September 2002 (2002-09-24), pages 219-222, XP010608549 ISBN: 0-7803-7467-3**

**Description**

The present invention relates to communication systems and methods in which a transmitter transmits a plurality of signals simultaneously to one or more receivers, and selects a phase vector from among a set of available phase vectors to apply to the plurality of signals. The present invention is applicable, for example, to orthogonal frequency division multiplexing (OFDM) communication systems and methods.

In an OFDM communication system a plurality N of sub-carriers are employed to carry data from a transmitter to one or more receivers. The number N of sub-carriers may be relatively large, for example N = 512. One problem which arises in OFDM communication systems is that a peak-to-average power ratio (hereinafter PAPR) tends to be high. The peak power increases generally according to the number of subcarriers. When the PAPR is high, an amplifier having a very wide dynamic range is required in the transmitter, which is undesirable.

Numerous techniques have been proposed to solve the problems with PAPR in OFDM communication systems.

For example, a back-off technique has been proposed for use in a high-power linear amplifier in the transmitter. The back-off technique allows the multicarrier signal to be maintained within a linear range by lowering an input power to the amplifier. This has the effect of lowering the operation point of the high-power linear amplifier in order to reduce distortion of the signal. However, the greater the extent of the back-off, the less efficient the utilisation of the amplifier becomes. Accordingly, a signal having a high PAPR may cause the efficiency of the linear amplifier to deteriorate.

Another technique which has been proposed to cause the multicarrier signal to have an amplitude within a linear operating range of the amplifier is a clipping technique. In this technique, when the amplitude of the signal exceeds a predetermined reference clipping value set in advance, a portion of the amplitude of the signal exceeding the reference clipping value is removed or clipped out. However, in the clipping technique, non-linear operation may cause in-band distortion, thereby increasing inter-symbol interference and bit error rate. Furthermore, in the clipping technique, out-of-band noise may cause channel interference, thereby causing the spectrum efficiency to deteriorate.

In a block coding technique, additional subcarriers are provided which are coded and transmitted in such a way as to lower the PAPR of the overall set of subcarriers, i.e. the subcarriers used for transmission of data and the additional subcarriers used for block coding. In this technique, the coding of the additional subcarriers achieves the correction or errors and the reduction of the PAPR without distortion of the signal. However, when subcarriers have large amplitudes, this technique provides very poor spectrum efficiency and requires a large look-up table or a large generation matrix, increasing the processing required at the transmitter.

In a tone reservation (TR) technique, some subcarriers from among the entire set of available subcarriers are reserved for PAPR reduction. The reserved carriers carry no data. The receiver simply disregards the subcarriers which carry no data and recovers the data from the remaining subcarriers. This can enable the receiver to have a simpler construction.

A gradient algorithm has also been proposed, which is an application of the clipping technique to the TR technique. In this case, signals having an impulse characteristic are generated using the subcarriers that carry no data, and inverse fast fourier transform (IFFT) output signals are clipped using the signals having the impulse characteristic. When the generated signals having an impulse characteristic are added to the IFFT output signals, data distortion occurs only in some subcarriers carrying no data and does not occur in the other subcarriers carrying data.

An analog coding technique is also possible. Clipping of the high amplitudes caused by analog circuitry leads to additional noise. In principle, it has been shown that so-called analog codes (Reed-Solomon codes over complex numbers) may be used for eliminating this noise.

Phase adjustment techniques have also been proposed for solving the PAPR problem. The phase adjustment techniques include a partial transmit sequence (PTS) method and a selective mapping (SLM) method.

In the PTS method, input data is divided into M sub-blocks, each of the M sub-blocks is subjected to L-point IFFT and is then multiplied by a phase factor for minimising the PAPR. Finally, the M sub-blocks are summed and transmitted.

In the SLM method, a given block of data which will constitute one OFDM symbol is multiplied by U (U>1) different available phase vectors. Each available phase vector comprises N phase elements, each corresponding individually to one of the N subcarriers. Each phase element sets a phase adjustment to be applied by the transmitter to the corresponding subcarrier for the data block concerned. The effect of this is to generate U statistically dependent "candidate" OFDM symbols for the given data block. The transmitter selects that one of the candidate symbols having the lowest PAPR and transmits the selected symbol to the receiver or receivers. Herein, the phase vector which was used to produce the selected symbol is referred to as the selected phase vector $\tilde{u}$.

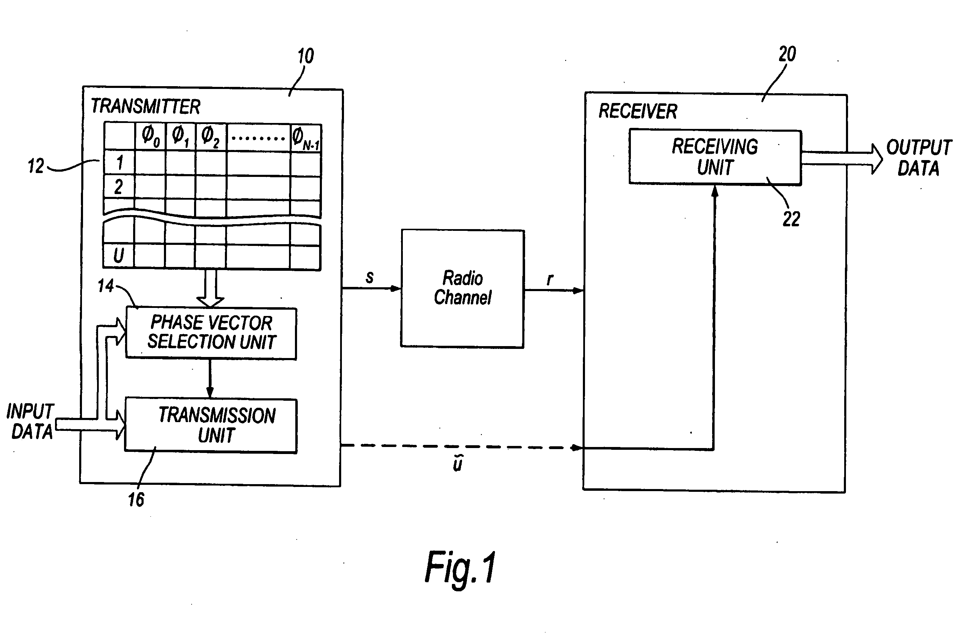

Figure 1 of the accompanying drawings shows parts of an OFDM communication system employing the SLM method.

The communication system of Figure 1 comprises a transmitter 10 and a receiver 20. The transmitter 10 includes an available phase vector storage unit 12, a phase vector selection unit 14 and a transmission unit 16. The available phase vector storage unit 12 stores data relating to U available phase vectors. Each phase vector is made up of N phase elements $\phi_0$, $\phi_1$, $\phi_2$, ..., $\phi_{N-1}$. Thus,

$$\mathbf{P}_u = [e^{j\phi_0^u}, e^{j\phi_1^u}, \cdots, e^{j\phi_{N-1}^u}] \tag{1}$$

assuming that $\phi_n^u \in (0, 2\pi]$, $u \in \{1,...,U\}$

The phase vector selection unit 14 has access to the stored available phase vectors and also receives a block C of input data which is to be transmitted by the transmitter 10 to the receiver 20 in a particular transmission time interval (TTI). As is well known in the art, an OFDM symbol is made up of a block of N modulation symbols, and each of the N modulation symbols is transmitted using one of N orthogonal subcarriers. The adjacent subcarrier separation $\Delta f = 1/T$, where T is the OFDM signal duration (TTI duration). The resulting multicarrier signal may be expressed as

$$s(t) = \frac{1}{\sqrt{N}} \sum_{n=0}^{N-1} c_n e^{j2\pi\Delta ft}, \qquad 0 \le t \le T \tag{2}$$

where $\mathbf{C}=(c_0 \, c_1 \, ... \, c_{N-1})$ represents a vector of N constellation symbols from a constellation. For the signal $s(t)$ the PAPR is given by:

$$\xi = \frac{\max|s(t)|}{E\{|s(t)|^2\}} \tag{3}$$

where E denotes expectation.

The phase vector selection unit 14 calculates the vector product of the input data vector C and each of the available phase vectors $P_u$ to produce U candidate OFDM symbols. The candidate symbol

$$\mathbf{c} \otimes \mathbf{P}_{\tilde{u}}, \qquad \tilde{u} \in \{1,...,U\}$$

which has the lowest PAPR is then selected for transmission by the transmission unit 16. Accordingly, each modulated signal $s_i$ carries a modulation symbol $c_i$ and has a phase adjustment $\phi_n^{\tilde{u}}$ set by the selected phase vector $\tilde{u}$.

At the receiver 20 the received signal after FFT demodulation can be expressed as

$$r_n = H_n c_n e^{j\phi_n^{\tilde{u}}} + n_n \tag{4}$$

where $H_n$ represents the frequency response of the fading channel of the n-th subcarrier and $n_n$ represents complex additive white Gaussian noise (AWGN).

The receiver comprises a receiving unit 22 which effectively reverses the phase adjustments applied at the transmitter to the selected OFDM symbol. As is clear from equation (4), to recover the data from the received signal the term $e^{j\phi_n^{\tilde{u}}}$ is required. Accordingly, the identity $\tilde{u}$ of the selected phase vector is required by the receiver 20.

In view of the receiver's requirement to know $\tilde{u}$, the transmitter 10 may transmit the identify of the selected phase vector for each OFDM symbol to the receiver. However, this requires at least $\log_2(\tilde{u})$ bits. For example, if U = 256, then 8 signalling bits are required. This constitutes an unacceptable signalling overhead in a practical OFDM system.

To avoid the signalling overhead associated with the transmission of the identity $\tilde{u}$ of the selected phase vector, a blind SLM receiver has been proposed in "A blind SLM receiver for PAR-reduced OFDM", A.D.S. Jayalath and C Tellambura, Proceedings of IEEE Vehicular Technology Conference, pp 218-222, Vancouver, Canada, 24 to 28 September 2002. The blind SLM receiver works on the basis that (1) $c_n$'s are restricted to a given signal constellation, for example QPSK, (2) the set of available phase vectors is fixed and known to the receiver, and (3) c⊗ $P_u$ and c⊗ $P_v$ are sufficiently different for u ≠ v. In other words, the set of available phase vectors have large Hamming distances, providing inherent diversity which can be exploited at the receiver. The necessary condition for the blind receiver to work is

$$c_n \, e^{\, j\phi_n^{\tilde{u}}} \, \notin \, Q \text{ for all } n \text{ and } u$$

The set of available phase vectors can be readily chosen to ensure this.

Assuming a distortionless and noiseless channel, the blind SLM receiver receives the OFDM symbol $f_{\tilde{u}}(c)$ determined by the transmitter as having the minimum PAPR. The receiver computes

$$f_j^{-1}\left(f_{\tilde{u}}(c)\right) \text{ for } j = 1, 2, \ldots, U$$

Because of the three assumptions mentioned above, $f_j^{-1}\left(f_{\tilde{u}}(c)\right)$ will not be a valid vector of symbols from the constellation $\phi$ of the selected modulation scheme unless j = $\tilde{u}$.

The optimal decision metric for the blind SLM receiver is

$$D \;=\; \min_{\substack{[\hat{c}_0, \hat{c}_1, \ldots, \hat{c}_{N-1}] \\ P_{\tilde{u}}, \tilde{u} \in \{1, \ldots, U\}}} \sum_{n=0}^{N-1} \left| r_n \, e^{-j\phi_n^{\tilde{u}}} \;-\; H_n \hat{c}_n \right|^2 \qquad (5)$$

to carry out this miniaturisation, the minimum-distance H ⊗ $\hat{c}$ to $r \otimes P_0^*$ is determined, where $P_0$ is an available phase vector and $P_0^*$ is the conjugate of $P_0$. This can be done by using the Viterbi algorithm in the case of a coded system or by searching all $q^N$ data sequences in the case of uncoded q-ary modulation. This minimum-distance determination is repeated for each one of the available phase vectors. The global minimum-distance-solution yields the best estimates for c and $\tilde{u}$. In the case of a coded system, the overall complexity is U times that of a system without SLM.

In an uncoded system, equation (5) can only be solved by carrying out the $|.|^2$ operation $UN4^N$ times. This is of very high complexity and is only feasible when N is relatively small.

Jayalath and Tellambura disclosed in the above-mentioned paper a simplified decision metric having a lower complexity than the metric of equation (5):

$$D_{SLM} \;=\; \min_{P_{\tilde{u}}, \hat{u} \in \{1, 2, \ldots, U\}} \sum_{n=0}^{N-1} \min_{\hat{c}_n \in Q} \left| r_n e^{-j\phi_n^{\hat{u}}} - H_n \hat{c}_n \right|^2 \qquad (6)$$

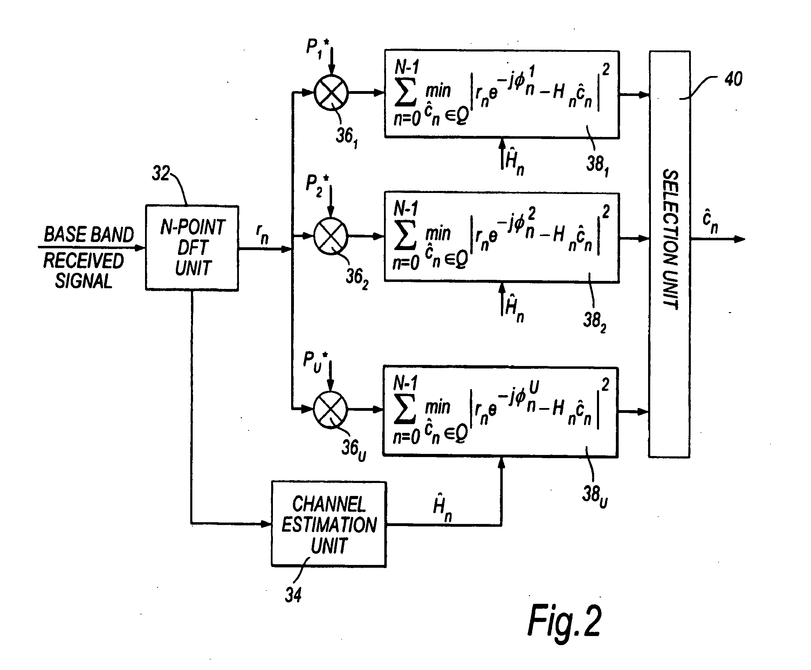

Figure 2 of the accompanying drawings shows parts of a blind SLM receiver 30 employing the simplified decision metric. The blind SLM receiver 30 of Figure 2 comprises an N-point DFT unit 32 which receives a baseband signal and carries out DFT demodulation to obtain a received signal $r_n$. The receiver 30 also comprises a channel estimation unit 34 which derives from the received signal an estimate $\hat{H}_n$ of the channel of the n-th subcarrier. The receiver 30 knows the U available phase vectors $P_1$ to $P_U$ and comprises U vector multipliers $36_1$ to $36_U$ corresponding respectively to the U available phase vectors $P_1$ to $P_U$. Each vector multiplier $36_i$ receives the received signal $r_n$ and the complex conjugate

$P_i{}^\bullet$ of its corresponding phase vector $P_i$ and multiplies the received signal and the complex conjugate together to produce $r \oplus P_i{}^\bullet$. The receiver 30 also comprises U processing units $38_1$ to $38_U$ corresponding respectively to the U available phase vectors. Each processing unit $38_i$ calculates the minimum-distance $H \otimes c$ to $R \otimes P_i{}^\bullet$ for its corresponding vector $P_i$. $r_n$ is detected into the nearest constellation point $c_n$ by comparing $r_n$ with $H_n c_n e^{j\phi_n^{\tilde{u}}}$ Thus, a hard decision is made for each subcarrier. For example, in a coded OFDM system having a given trellis structure, the Viterbi algorithm can be used in each processing unit $38_i$.

After calculating the minimum distance for each of the available phase vectors, the respective minimum distances for the phase vectors are applied to a selection unit 40 which identifies the phase vector which provides the minimum Euclidian distance solution. The selection unit 40 outputs the minimum Euclidian distance solution as the detected data symbol $c_n$.

The simplified decision metric adopted in the blind SLM receiver of Figure 2 has the advantage that the number of $|.|^2$ operations in equation (6) to be performed by the receiver is qUN, where q denotes q-ary modulation. For example, in the case of QPSK modulation, q = 4. Thus, the Figure 2 receiver is effective in achieving some degree of processing simplification on the receiver side, as well as avoiding the signalling overhead associated with transmitting the identity $\tilde{u}$ of the selected phase vector from the transmitter to the receiver.

However, the Figure 2 receiver is still considered impractical in the case in which higher-order modulation schemes such as 16QAM and 64QAM are required and/or when the number of available phase vectors is increased. Generally, the higher the number of phase vectors that are available, the greater the PAPR reduction that can be achieved. Furthermore, the transmitter side is likely to be a Node B and the receiver side is likely to be a user equipment UE. It is unlikely that a UE will have the processing capability to carry out the processing required by the Figure 2 receiver. Even if processing capability did become available, the power consumption associated with the processing would make the battery life of portable equipment undesirably short.

Baxley R J et al: "Ordered phase sequence testing in SLM for improved blind detection" The Sixth IEEE International Workshop on Signal Processing Advances in Wireless Communications 5-8 June 2005 New York, UY, USA, 5 June 2005 (2005-06-05), pages 256-259, XP002371930, discloses an altered form of SLM that tests phase sequences in an ordered manner and ceases testing when the PAR is below a threshold. Aside from having a reduced computational complexity compared to traditional SLM, the modification allows for maximum a *posteriori* (MAP) blind detection of SLM phase mappings in the receiver. MAP detection is possible because, by testing the phase sequences in an ordered way, different phase mappings have different probabilities of occurrence. The paper discloses the MAP metric as well as a lower-complexity approximation to the MAP metric.

In view of the problems described above, it is desirable to provide a communication method and system and a transmitter capable of selecting a suitable phase vector without an undue processing burden on the transmitter side. Alternatively, or in addition, it is desirable to provide a communication method and system and a receiver capable of identifying the phase vector selected by the transmitter without undue processing burden on the receiving side. Alternatively, or in addition, it is desirable to provide a communication method and system and a transmitter and a receiver in which a signalling overhead between the transmitter and the receiver is managed effectively and/or reduced.

According to a first aspect of the present invention there is provided a communication method in which a transmitter transmits data to one or more receivers using a plurality of subcarriers simultaneously, the method comprising: at the transmitter, selecting a suitable phase vector $P\tilde{u}$ from among a plurality of available phase vectors to apply to the data to be transmitted, each said available phase vector comprising a plurality of phase elements each of which corresponds to one or more of said subcarriers and sets a phase adjustment to be applied by the transmitter to said corresponding subcarrier(s); wherein the selection of the suitable phase vector is initially limited to consideration in a parallel manner of phase vectors belonging to a first set of the available phase vectors within the plurality of available phase vectors, and is expanded to further phase vectors outside said first set when no suitable phase vector is found in said first set.

In such a method the processing burden at the transmitter that is associated with the selection of the phase vector is reduced. If a suitable phase vector is found in the first set, then it is not necessary to consider the further phase vectors outside the first set.

In the selection of the suitable phase vector, a suitability of such an available phase vector is based, in one embodiment of the present invention, on a peak-to-average power ratio (PAPR) reduction achievable by applying the phase vector concerned to the data to be transmitted. This enables the invention to achieve useful PAPR reductions without an undue processing burden at the transmitter. In the case of PAPR reduction, the greater the number of available phase vectors that the transmitter has, the greater the likelihood of being able to achieve a good PAPR reduction for any given block of data to be transmitted. However, because the data to be transmitted is random, it will often be the case that a suitable phase vector for a particular block of data can be found in the first set of available phase vectors without having to consider further phase vectors outside the first set.

Preferably, the phase vectors of said first set are fewer in number than said further phase vectors outside said first set. This can lead to significant processing burden reductions whilst still achieving satisfactory results. For example, when the phase vectors are used for PAPR reduction, the first set may have ten times fewer phase vectors than there are further vectors, without significantly degrading PAPR performance.

A further advantage of this aspect of the invention arises if the transmitter transmits to the receiver identifying information identifying the selected phase vector, as is the case for example in the Figure 1 system described above. In this case, an amount of said identifying information is smaller when the selected phase vector belongs to the first set than when the selected phase vector is one of said further phase vectors outside said first set. Thus, the amount of signalling associated with the transmission of the identifying information can be reduced. If there are 10 times fewer phase vectors in the first set than outside the first set, at least 3 fewer bits are required to transmit the identity of the phase vector when it comes from the first set.

The further vectors outside the first set may comprise one or more further sets of phase vectors. In a preferred embodiment, the plurality of available phase vectors are organised in a hierarchy of layers, said first set of phase vectors corresponding to a first one of said layers, and there being a second set of phase vectors corresponding to a second one of said layers, and so on for each higher layer, if any, of the hierarchy of layers. In this case the selection of the suitable phase vector may be expanded from one set to the next in accordance with said hierarchy of layers. In this way, as many phase vectors as are deemed necessary for adequate performance, e.g. PAPR performance, can be made available, but because the phase vectors are arranged in sets which are considered in turn the processing burden can still be kept manageable.

Preferably, the set corresponding to a given layer has fewer phase vectors than the set corresponding to a higher layer. This may be true for all layers, if desired.

In one embodiment, said first set has a threshold value for peak-to-average power ratio reduction, and it is judged that there is no suitable phase vector in said first set if none of the phase vectors in said first set is able to achieve a peak-to-average power ratio reduction above said threshold value for said first set. Thus, the further phase vectors are only considered if none of the first-set phase vectors can provide a good enough PAPR performance.

In a hierarchical system, such a threshold value is preferably provided for each set other than the set corresponding to the highest layer. For each set in turn other than the set corresponding to the highest layer it is judged that there is no suitable phase vector in that set if none of the phase vectors in that set is able to achieve a peak-to-average power ratio reduction above said threshold value for that set.

The threshold values for the different sets may be the same. However, on average the greater the number of vectors in a set, the more likely it is that a higher PAPR reduction will be achievable by one of the members of the set. Accordingly, if for example the sets contain increasing numbers of phase vectors, it may be appropriate to make the threshold value for the set corresponding to at least one layer lower than the threshold value for the set corresponding to a higher layer.

In one embodiment, for at least one set, all the phase vectors of the set are considered and the phase vector that is able to achieve the highest peak-to-average power ratio reduction is selected as the suitable phase vector provided that the reduction concerned is above said threshold value for the set. This will lead to the best available phase vector of the set being selected, so that the performance is improved.

However, the processing burden in such a case is fixed for the set. An alternative is possible in which, for at least one set, the phase vectors of the set are considered sequentially for suitability, and when a first suitable phase vector is found (e.g. one which achieves a PAPR reduction above the threshold value for the set) any remaining phase vectors of the set are not considered. This can lead to further processing burden savings, although at the expense of performance as the first suitable phase vector may not be the overall best available phase vector in the set. Of course, it would be possible to find the first N suitable phase vectors and select the best one of these N to improve the performance at the expense of some extra processing burden.

The transmitter may transmit to the receiver set information for use by the receiver to identify the set to which the selected phase vector belongs without transmitting any further information to identify the selected phase vector. This leads to greatly reduced signalling.

In this case, the receiver can operate on a semi-blind basis to recover the data from the received plurality of signals with knowledge only of the set to which the selected phase vector belongs.

Such a semi-blind receiver may have a plurality of trial phase vectors corresponding respectively to the plurality of available phase vectors of the transmitter. Each trial phase vector may be identical to its corresponding available phase vector of the transmitter or may be derived from it. For example, each trial phase vector may be the complex conjugate of its corresponding available phase vector on the transmitter side.

The semi-blind receiver employs the set information to identify the set to which the selected phase vector belongs, and processes the received plurality of signals only with those trial phase vectors that correspond respectively to the available phase vectors of the identified set to recover the data from the received plurality of signals. This saves the receiver from having to use all of the trial phase vectors in a case in which, say, the selected phase vector belongs to the first set. Processing burden is therefore reduced on the receiver side in the same way as on the transmitter side.

It is also possible for the receiver to operate fully blindly, i.e. without the set information or any other information from the transmitter about the selected phase vector. This leads to even greater signalling requirement reductions. Like the semi-blind receiver, such a fully-blind receiver may have a plurality of trial phase vectors corresponding respectively to the plurality of available phase vectors of the transmitter. The fully-blind receiver may process all the trial phase vectors to recover the data, as in the Figure 2 system described above. Preferably, however, the receiver (see also the fourth aspect of the invention described below) initially processes the received plurality of signals with those trial phase vectors that correspond respectively to the available phase vectors of the first set of available phase vectors to recover the data from the received plurality of signals, and expands the trial phase vectors to further trial phase vectors corresponding respectively to available phase vectors outside said first set when satisfactory data recovery is not achieved with any of the trial phase vectors that correspond respectively to the available phase vectors of the first set. This can lead to processing burden savings on the receiver side.

In another embodiment, at least one set is subdivided into a plurality of subsets, and the transmitter transmits to the receiver subset information for use by the receiver to identify the subset to which the selected phase vector belongs. The subset information requires fewer bits than information identifying the selected phase vector uniquely, so the signalling requirement can be reduced whilst giving the receiver some assistance in recovering the data and enabling it to reduce the associated processing burden.

Another version of the semi-blind receiver, suitable for use in this case, has a plurality of trial phase vectors corresponding respectively to the plurality of available phase vectors of the transmitter. The receiver employs the subset information to identify the subset to which the selected phase vector belongs, and processes the received plurality of signals only with those trial phase vectors that correspond respectively to the identified subset to recover the data from the received plurality of signals.

According to a second aspect of the present invention there is provided a transmitter adapted to transmit data to one or more receivers using a plurality of subcarriers simultaneously, the transmitter comprising: phase vector selecting means for selecting a suitable phase vector from among a plurality of available phase vectors to apply to the data to be transmitted, each said available phase vector comprising a plurality of phase elements each of which corresponds to one or more of said subcarriers and sets a phase adjustment to be applied by the transmitter to said corresponding subcarrier(s); wherein the phase vector selecting means is operable initially to limit the selection of the suitable phase vector to consideration in a parallel manner of phase vectors belonging to a first set of the available phase vectors within the plurality of phase vectors, and is further operable to expand the selection to further phase vectors outside said first set when no suitable phase vector is found in said first set.

According to a third aspect of the present invention there is provided a receiver adapted to receive a multi-carrier signal transmitted by a transmitter using a plurality of subcarriers simultaneously, the transmitter having applied to data to be transmitted a phase vector selected from among a plurality of available phase vectors, each said available phase vector comprising a plurality of phase elements each of which corresponds to one or more of said subcarriers and sets a phase adjustment applied by the transmitter to said corresponding subcarrier(s), said receiver comprising: processing means for processing the received multi-carrier signal with trial phase vectors of a plurality of trial phase vectors to recover said data from the received multi-carrier signal, said plurality of trial phase vectors corresponding respectively to the plurality of available phase vectors of the transmitter; limiting means operable to limit the processing by said processing means initially to consideration in a parallel manner of trial phase vectors of a first set of trial phase vectors within the plurality of trial phase vectors, and also operable to expand the processing to further phase vectors outside said first set if satisfactory data recovery is not achieved with any of the trial phase vectors of said first set.

In a receiver embodying the third aspect of the invention, the data recovery processing is not limited to detecting the minimum distance solution using the method of equation (5) or the simplified metric of equation (6). Any suitable data recovery process can be applied which can enable the receiver to recover the data blindly or semi-blindly, i.e. without being informed of the identity of the selected phase vector. Depending on the data recovery process, there may be certain restrictions on the available phase vectors at the transmitter, for example the available phase vectors may need to possess properties that prevent the receiver from confusing two or more available phase vectors in the data recovery process. Such restrictions may include prescribed minimum Hamming distances. In the case in which the receiver is informed of the identity of the selected phase vector using side information the data recovery process may be much simpler. For example, the receiver may simply apply the reverse phase adjustments to those applied in the transmitter.

It will be appreciated by those skilled in the art that the present invention may be implemented in hardware or software or in a combination of the two. For example, each transmitter and each receiver mentioned above may have a processor such as a digital signal processor (DSP), or a computer, which operates according to a program. According to other aspects of the present invention there are provided programs adapted to be executed on the processor or computer in such a transmitter or receiver to cause it to carry out its functions. Such a program may be provided by itself or on a carrier medium. The carrier medium may be a recording medium such as a CD-ROM or a transmission medium such as a signal.

Each transmitter as described above may be included in a Node-B (base station) of a wireless communication system or in a UE (user terminal or mobile station) of such a system. Thus, according to a further aspect of the present invention there is provided a base station of a wireless communication system, said base station comprising a transmitter embodying the aforementioned second aspect of the present invention. According to a further aspect of the present invention there is provided a user terminal of a wireless communication system, said user terminal comprising a transmitter embodying the aforementioned second aspect of the present invention. According to a further aspect of the present invention there is provided a base station comprising a receiver embodying the aforementioned third aspect of the present invention. According to a further aspect of the present invention there is provided a user terminal comprising a receiver embodying the aforementioned third aspect of the present invention.

The communication system may be an OFDM system.

The data carried by the subcarriers may be user data, or control information such as pilot information, or a combination of the two.

Reference will now be made, by way of example, to the accompanying drawings, in which:

Figure 1, discussed hereinbefore, shows parts of an OFDM communication system employing SLM;
Figure 2, also discussed hereinbefore, shows parts of a blind receiver adapted for use in an SLM method;
Figure 3 shows parts of a communication system according to a first embodiment of the present invention;
Figure 4 is a flowchart for use in explaining operations carried out in a transmitter of the Figure 3 system;
Figure 5 is a schematic view for use in explaining signalling in the Figure 3 system;
Figure 6 is a graph illustrating a variation of a bit error rate with signal-to-noise ratio of the Figure 3 system when the number of subcarriers is 128;
Figure 7 is a graph corresponding to Figure 6 but for 256 subcarriers;
Figure 8 shows parts of a communication system according to a second embodiment of the present invention;
Figure 9 is a schematic view for use in explaining signalling in the Figure 8 system;
Figure 10 shows parts of a communication system not directly embodying the present invention;
Figure 11 is a graph illustrating a variation of a bit error rate with signal-to-noise ratio of the Figure 10 system when a modulation scheme is 16 QAM;
Figure 12 is a graph illustrating a variation of a bit error rate with signal-to-noise ratio of the Figure 10 system when a modulation scheme is QPSK:
Figures 13(A) to 13(D) are schematic views for illustrating various signalling possibilities in embodiments of the present invention.

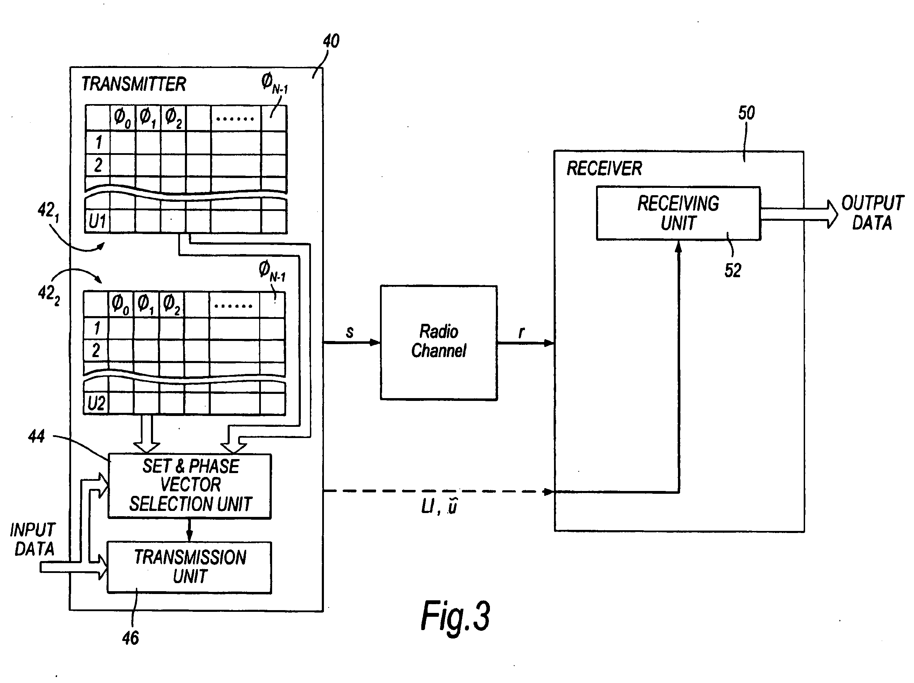

Figure 3 shows parts of a communication system according to a first embodiment of the present invention. The Figure 3 system is an OFDM system having N subcarriers, but the present invention is applicable to communication systems other than OFDM systems.

The Figure 3 system comprises a transmitter 40 and a receiver 50. In this embodiment, it is assumed that the transmitter and receiver are adapted for wireless communication, but embodiments of the present invention are also applicable to communication systems having a wire connection between the transmitter and the receiver. The transmitter 40 is, for example, a Node B of a wireless communication system, and the receiver 50 is, for example, a user equipment (UE) of such a wireless communication system.

The transmitter 40 differs from the transmitter described previously with reference to Figure 1 in that it has two sets of available phase vectors from which it can select a phase vector to apply to a given block of input data. Although for the sake of simplicity only two such sets are used in this embodiment, as described later more than two sets of available phase vectors could be provided.

The first set of available phase vectors comprises U1 phase vectors in total, and the second set of available phase vectors comprises U2 phase vectors in total, where U2>U1. For example, U2 = 10 x U1. The phase vectors in the first and second sets are mutually exclusive.

Each phase vector is made up of N phase elements. In this embodiment, each phase element corresponds to a different one of the N subcarriers and sets a phase adjustment to be applied by the transmitter 40 to the corresponding subcarrier.

As shown in Figure 3 the transmitter 40 comprises a first phase vector storage unit $42_1$ for storing data relating to the first set of phase vectors, and a second phase vector storage unit $42_2$ for storing data relating to the phase vectors of the second set of phase vectors.

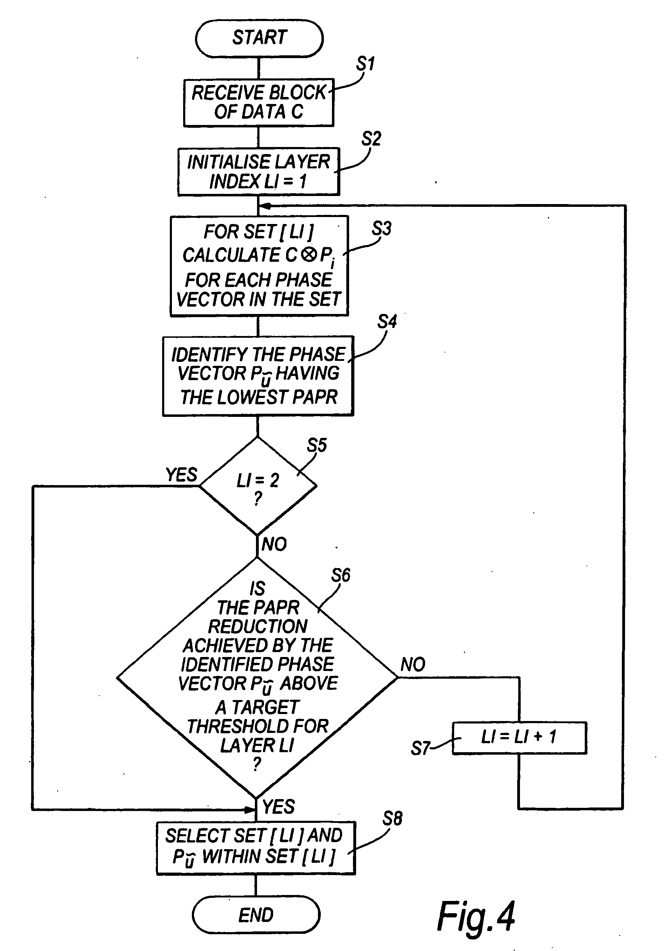

The transmitter 40 also comprises a set and phase vector selection unit 44 which is connected to both of the phase vector storage units $42_1$ and $42_2$. The set and phase vector selection unit 44 is also connected to receive blocks of input data. Each block constitutes an OFDM symbol to be transmitted in one transmission time interval (TTI). The set and phase vector selection unit 44 selects a set and a phase vector within the selected set to apply to each block of data, as will now be described with reference to Figure 4.

In Figure 4, in step S1 the set and phase vector selection unit 44 receives a block C of data to be transmitted to the receiver 50. In step S2, a layer index LI is initialised to the value 1. In this embodiment, the first set of phase vectors is considered to belong to layer 1 and the second set of phase vectors is considered to belong to layer 2. In step S3, the set and phase vector selection unit 44 calculates the vector product $C \otimes P_i$ for each one of the available phase vectors of the set of phase vectors for the current layer (layer 1).

In step S4 the phase vector $P_{\tilde{u}}$ having the lowest PAPR is identified, for example by applying equation (3) above to each vector product, and looking for the minimum PAPR value. In step S5 it is checked whether the final layer (layer 2 in this case) has been reached. If not, as is the case here, processing moves to step S6. In step S6 a check is made whether the PAPR reduction achieved by the phase vector $P_{\tilde{u}}$ identified in step S4 is above a target threshold for the current layer (layer 1). The target threshold is dependent on the modulation scheme, the number of sub-carriers and the characteristics of the amplifier.

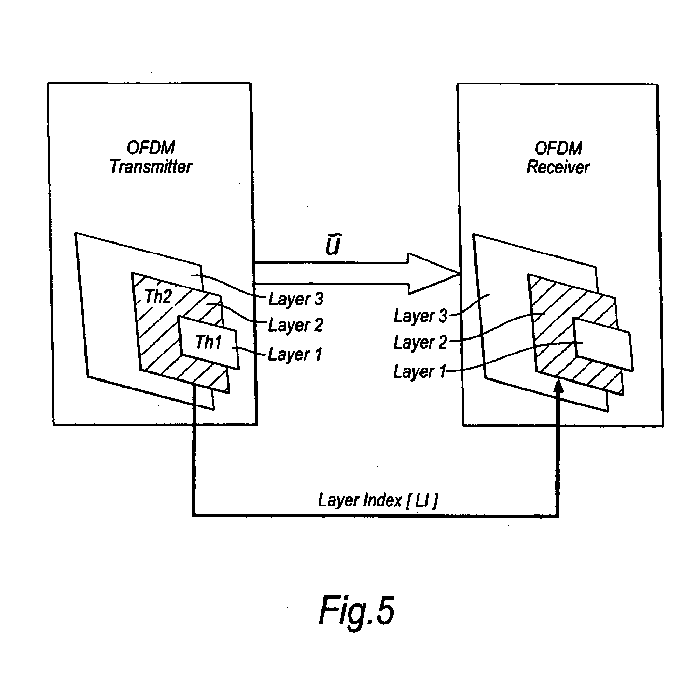

In this embodiment, there are only two layers, and a threshold is only set for layer 1. However, in other embodiments, more than two layers may be used as a hierarchy of layers. In this case, the threshold for layer 2 may be set higher than the threshold for layer 1. The reason is that the greater the number of available phase vectors in the set associated with the layer, the higher the expected PAPR reduction on average. Figure 5 shows an example having three layers, with thresholds Th1 and Th2 for layers 1 and 2 respectively.

Incidentally, although Figure 5 shows the same three layers in the receiver, in the first embodiment the transmitter sends the identity of the selected phase vector to the receiver, so it is not necessary to organise the phase vectors in the receiver into different sets corresponding to the layers.

Example values of the target threshold for layer 1 are 5.9dB in the case in which the number of subcarriers is 128, and 6.6dB in the case in which the number of subcarriers is 256.

If phase vector $P_{\tilde{u}}$ achieves a PAPR reduction above the target threshold for the current layer in step S6, processing proceeds to step S8 in which the set of the current layer (first set) is selected and the phase vector $P_{\tilde{u}}$ having the lowest PAPR within the set is also selected. Processing then terminates, and the block C of data is transmitted by the transmission unit 46 to the receiver using the selected phase vector $P_{\tilde{u}}$.

If, on the other hand, in step S6 it is found that even the phase vector $P_u$ having the lowest PAPR fails to provide a PAPR reduction above the target threshold for the current layer, then processing proceeds to step S7 in which the layer index LI is incremented to switch to the next layer (layer 2 in the present case). The processing of steps S3 and S4 is then repeated for the second set of available phase vectors. When processing reaches step S5 it is found that the current layer is layer 2 and processing proceeds to step S8. Accordingly, the set of layer (second set) 2 is selected and the phase vector $P_{\tilde{u}}$ having the lowest PAPR within the second set is also selected. Processing then terminates and the transmission unit 46 transmits the block C using the selected phase vector from the second set.

It will be understood that in the first embodiment the selection of a suitable phase vector is initially limited to phase vectors belonging to the first set. The selection is expanded to further phase vectors outside the first set, i.e. the second set, when no suitable phase vector is found in the first set. As a result, the selected phase vector will come from the first set at some times (TTIs) and from the second set at other times (TTIs). The set from which the selected phase vector comes depends in this case on the data of the block to be transmitted in each TTI and on the PAPR reductions that are achievable for that data by the particular phase vectors of the sets. The reduction in the processing burden associated with the selection of the phase vector in the transmitter 40 depends on the ratio between the number of times that a suitable phase vector is available in the first set compared to the number of times that a suitable phase vector is available only in the second set.

The reduction in the processing burden of the selection of the phase vector can be defined as

$$\lambda = \frac{\sum_{i=1}^{L} U_{TOTAL}(L_i)}{U_{TOTAL}(SLM)} \qquad (7)$$

where $U_{TOTAL}(L_i)$ represents the total number of vectors processed in steps S3 and S4 over a series of data blocks, and $U_{TOTAL}(SLM)$ represents the total number of vectors which would be processed in the previously-considered transmitter 10 of Figure 1. Over a simulated series of 10,000 data blocks, it was found that for U1 = 160, U2 = 1600, $\lambda$ = 0.45, i.e. there is a 55% reduction in the processing burden compared to the transmitter of Figure 1 having U = 1600.

In the first embodiment, the transmitter 40 transmits the layer index LI and the identity $\tilde{u}$ of the selected phase vector to the receiver 50 as side information. Figure 5 is a schematic view showing the way in which the side information is transmitted from the transmitter to the receiver in the Figure 3 system. This side information is used by the receiving unit 52 in the receiver to recover the data from the received signal. The receiver 50 knows the available phase vectors of both the first and second sets. For example, although not shown in Figure 3, the receiver 50 may comprise first and second phase vector storage units identical to the storage units $42_1$ and $42_2$ provided in the transmitter. Alternatively, the receiver-side storage units may store data relating to the conjugates of the phase vectors. Given the side information, the receiving unit 52 can obtain the term $e^{j\phi_n^{\tilde{u}}}$ and use it to determine $c_n$ for example based on equation (4) above.

Because the number U1 of phase vectors in the first set is smaller than the number U2 of phase vectors in the second set, in the case in which the selected phase vector comes from the first set, the number of bits required to transmit the identity $\tilde{u}$ of the selected phase vector can be smaller. For example, in the case mentioned above in which U1 = 160, 8 bits are sufficient to convey $\tilde{u}$, compared to the 11 bits required to convey $\tilde{u}$ for the second set. Thus, as well as achieving a reduction in the transmitter processing burden, the first embodiment can also achieve a reduction in the signalling overhead.

The performance of the Figure 3 system was simulated using the simulation assumptions set out in Table 1 below.

**Table 1**

| Parameter | Value |
|---|---|
| **Total number of subcarriers** | 128, 256 |
| **Synchronisation** | Perfect |
| **Modulation** | 16 QAM |
| **Sampling rate** | 256 and 512 samples per symbol |
| **Clipping Level** | 2 dB |
| **Subcarrier spacing** | 19.5 KHZ |
| **Channel** | AWGN |
| **Number of layers** | 2 |
| **Number of required signalling bits** | 1 |
| **Threshold for 128 carriers** | 5.9 dB |
| **Threshold for 256 carriers** | 6.6 dB |
| **U2 (larger layer)** | 1600 |
| **U1 (Smaller layer)** | 160 |
| **U (Traditional SLM)** | 1600 |

Two versions of the system were simulated, the first version having 128 subcarriers and the second version having 256 carriers. In both cases, there were just two layers. The target threshold for layer 1 for the first version was 5.9dB and for the second version was 6.6dB.

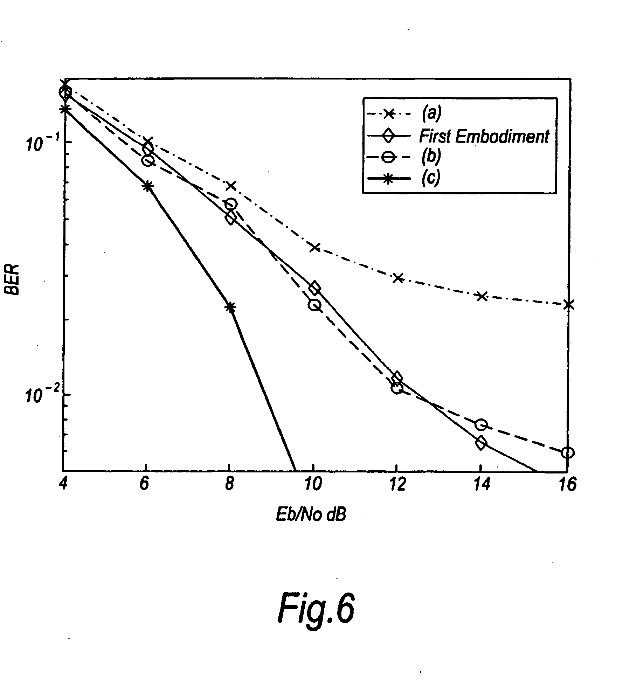

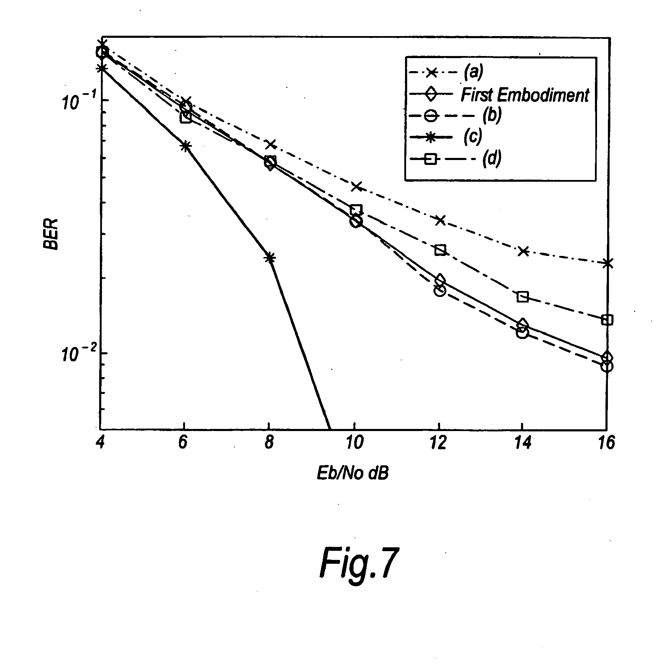

The results of the simulation for the first version are shown in Figure 6 and the results of the simulation for the second version are shown in Figure 7. In both cases, the variation of a bit error rate (BER) with signal to noise ratio (Eb/No) was plotted. The performance of a communication system according to the first embodiment was compared with (a) a system having no PAPR reduction, (b) the previously-considered system of Figure 1 using U = U2 phase vectors, and (c) an ideal system. In the case of Figure 7, an additional system is considered, which is the system of Figure 1 with U = U1 phase vectors. From Figures 6 and 7 it can be observed that the system of Figure 3 performs almost as well as the system (b) of Figure 1 having U2 phase vectors, despite achieving a processing burden reduction on the transmitter side of 55%. From Figure 7 it can be observed that the system of Figure 3 performs much better than the system (d) of Figure 2 having U1 phase vectors.

The PAPR performance of the first embodiment was compared with that of (a) the system of Figure 1 (in which the transmitter transmits the identity $\tilde{u}$ of the selected phase vector to the receiver) and (b) a system not having PAPR reduction. In the case of system (a) the number of available phase vectors was assumed to be 1600. In the case of the first embodiment (and the second embodiment to be described later), U1 was assumed to be 160 and U2 was assumed to be 1600. Again, two versions of the systems were considered, the first having 128 subcarriers and the second having 256 subcarriers. The results are presented in Table 2 below. The values in Table 2 represent the PAPR level before the soft-limiting non-linear amplifier. The values were measured and averaged over 10,000 independent transmission periods.

**Table 2**

| PAPR Reduction Techniques | PAPR (dB) Level (128 Sub carriers) | PAPR (dB) Level (256 Sub carriers) |
|---|---|---|
| Traditional SLM | 5.8055 | 6.51 |
| Proposed | 5.8490 | 6.585 |
| No PAPR Reduction | 9.1578 | 9.156 |

As can be seen from Table 2 the first embodiment achieves almost the same degree of PAPR reduction as the system of Figure 1 whilst achieving a significant reduction in transmitter processing burden.

Incidentally, the true impact of PAPR reduction can be observed more clearly when the simulation is carried out for more transmission periods (i.e. closer to a practical situation). In that case, all of the systems other than the ideal system will tend to have higher bit error rates simply because a more extreme PAPR level is likely to be experienced at some time. However, it is still expected that the performance of the Figure 3 system will be close to the performance of the Figure 1 system having U2 phase vectors.

Next, a variation of the first embodiment will be described.

Referring back to Figure 4, it can be seen that in steps S3 and S4 the set and phase vector selection unit 44 considers all the phase vectors in the set applicable to the current layer LI and identifies the phase vector within that set which has the lowest PAPR. This is desirable because it enables the best-available PAPR reduction to be achieved for the set concerned. However, it is not essential for the set and phase vector selection unit 44 to consider all of the phase vectors in all of the sets. For example, the phase vectors may be considered sequentially in at least one set. As each of the phase vectors is considered in turn, its PAPR reduction is calculated and compared with a threshold value (which may be the same as the threshold value in step S5). When the first phase vector which achieves a PAPR reduction above the threshold is found, it is unnecessary to go on to consider the remaining phase vectors in the set. As a result, the overall PAPR performance of the system will be reduced but the processing burden on the transmitter is reduced still further.

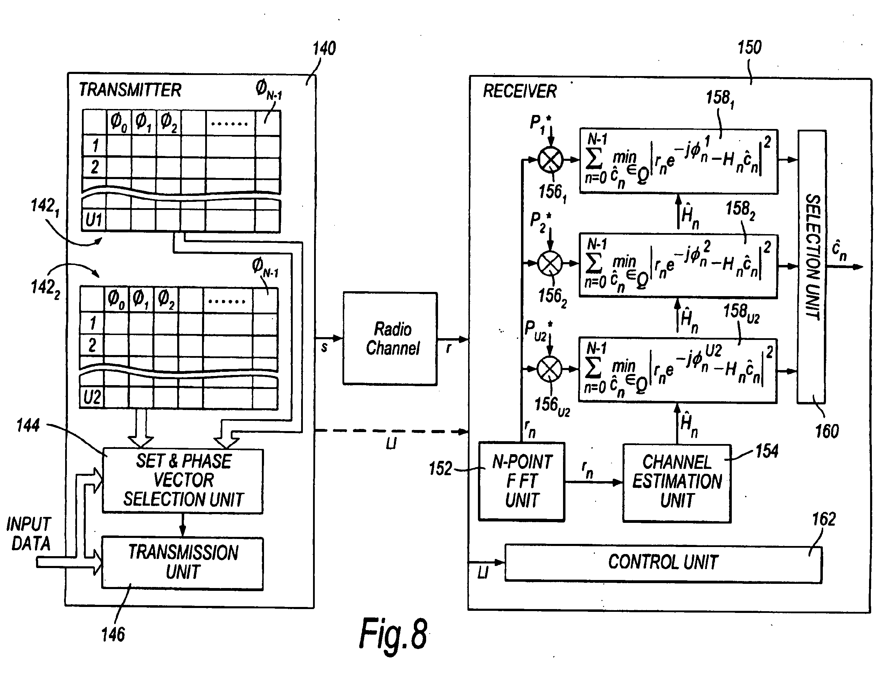

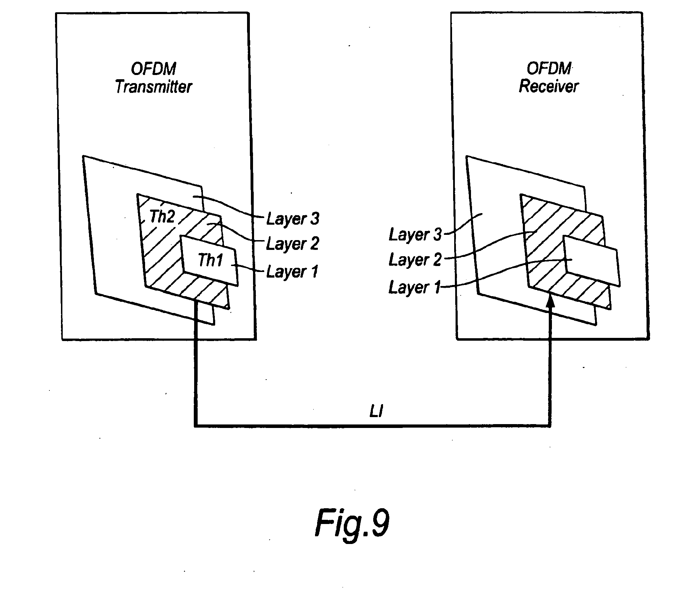

Next, a second embodiment of the present invention will be described with reference to Figures 8 and 9.

The communication system of the second embodiment is shown in Figure 8 and comprises a transmitter 140 and a receiver 150. The transmitter 140 is generally similar to the transmitter 40 of the first embodiment. In particular, the transmitter 140 comprises first and second phase vector storage units $142_1$ and $142_2$ which are the same as the first and second phase vector storage units $42_1$ and $42_2$ described previously with reference to Figure 3. The transmitter 140 also comprises a set and phase vector selection unit 144 which is the same as the set and phase vector selection unit 44 described previously with reference to Figure 3.

The transmitter 140 also comprises a transmission unit 146 which is similar to the transmission unit 46 described with reference to Figure 3. However, whereas the transmission unit 46 in Figure 3 transmits both the layer index LI and the identity $\tilde{u}$ of the selected phase vector for that layer, the transmission unit 146 in Figure 8 transmits only the layer index LI, as shown in Figure 9. The identify $\tilde{u}$ of the phase vector within the selected layer is not transmitted by the transmission unit 146.

Because the transmission unit 146 does not transmit the identity $\tilde{u}$ of the selected phase vector, the receiver 150 has a different constitution to that of the receiver 50 in Figure 3. The receiver 150 is "semi-blind", in the sense that the only information it receives from the transmitter for use in identifying the selected phase vector is the layer index LI. However, as in the case of the receiver 50 the receiver 150 knows all the phase vectors in both sets of phase vectors used by the transmitter 140. The receiver has storage units (not shown) which store data relating to a set of trial phase vectors for each layer. Each trial phase vector corresponds individually to one of the available phase vectors at the transmitter. In this embodiment, each trial phase vector is simply the same phase vector as its corresponding available phase vector. The storage units in the receiver are therefore the same as the storage units $142_1$ and $142_2$ of the transmitter but, alternatively, the storage units in the receiver may store data relating to the complex conjugates $P_i^\bullet$ of the phase vectors, since this is what is required for application to the complex multipliers $156_i$.

The receiver 150 comprises an N-point FFT unit 152 which receives the baseband signal. In this embodiment the FFT unit 152 subjects the baseband signal to FFT demodulation processing but in other embodiments discrete Fourier transform (DFT) processing may be used. The FFT unit 152 outputs $r_n$.

The receiver also comprises a channel estimation unit 154 which is connected to the FFT unit 152 for receiving

$r_n$. The channel estimation unit 154 produces a channel estimate $\hat{H}_n$ for the channel associated with each sub-carrier.

The receiver 150 also comprises U2 vector multipliers $156_1$ to $156_{U2}$ and U2 processing units $158_1$ to $158_{U2}$. As can be seen from the transmitter 140 in Figure 8, U2 is the number of phase vectors in the second (larger) set of available phase vectors.

The received signal $r_n$ after the FFT demodulation in the FFT unit 152 is applied to a first input of each of the vector multipliers $156_i$. Each vector multiplier $156_i$ also has a second input to which the complex conjugate $P_i^*$ of one of the trial phase vectors $P_i$ is applied. Each vector multiplier $156_i$ outputs the vector product $r \otimes P_i^*$ to its corresponding processing unit $158_i$.

Although not shown in Figure 8, each processing unit $158_i$ comprises a hard decision unit which, for each subcarrier, detects $r_n$ into the nearest constellation point $\hat{C}_n$. This hard decision is made by comparing $r_n$ with

$$H_n c_n e^{j\phi_n^{\tilde{u}}}$$

Each processing unit $158_i$ is associated with a different one of the trial phase vectors $P_i$ but must consider each of the available constellation points for the modulation scheme applied to the subcarriers. For example, in the case of QPSK, there are four available constellation points. This means that for QPSK each processing unit $158_i$ considers each of the four available constellation points and determines which one of the available constellation points provides the minimum distance $H \otimes \hat{c}$ to $r \otimes P_i^*$ for its associated phase vector $P_i$. This can be done using the Viterbi algorithm. Results from the processing units are then compared by a selection unit 160 which selects the minimum Euclidian distance solution. This selection yields the data sequence $\hat{C}_n$. The identity $\tilde{u}$ of the particular phase vector which provided the minimum distance solution is not explicitly output, but of course could be output if required by some other part of the receiver. It will be understood that the vector multipliers 156, processing units 158 and selection unit 160 together implement the decision metric of equation (6) above.

The receiver 150 also comprises a control unit 162 which controls the overall operation of the receiver.

When the layer index LI is received from the transmitter 140 the control unit 162 retrieves data from the relevant receiver-side storage unit (not shown) for the layer indicated by the layer index LI. In the case in which the layer index indicates the first layer, only the U1 trial phase vectors from the first set need to be processed. Accordingly, the complex conjugates of those U1 trial phase vectors are applied to the first U1 vector multipliers 156, to $156_{U1}$, and only the processing units $158_1$ to $158_{U1}$ are employed. The complex multipliers $156_{U1+1}$ to $156_{U2}$ and the corresponding processing units $158_{U1+1}$ to $158_{U2}$ are deactivated, so as to save battery power.

In the case in which the received layer index LI indicates the second layer (layer 2), all the complex multipliers $156_1$ to $156_{U2}$ and all the processing units $158_1$ to $158_{U2}$ are used.

The processing requirement for the receiver 150 in the second embodiment is of course much higher than the processing requirement of the transmitter 50 in the first embodiment, because the transmitter is operating on a semi-blind basis. However, because the receiver is supplied with the layer index LI as side information, at least in the case in which the layer index indicates the first layer, the processing burden on the receiver is reduced as compared to the fully blind receiver described previously with reference to Figure 2. The actual reduction in processing burden depends on the ratio of the number of times that the first layer is selected compared to the number of times that the second layer is selected. As explained above in relation to the processing burden reduction on the transmitter side in the first embodiment, it is expected that the processing burden on the receiver may also be reduced significantly compared to the fully blind receiver.

The main benefit of the second embodiment, as compared to the first embodiment, is in the reduction of the signalling overhead. In the case in which there are only two available layers, the layer index LI will require only a single bit, for example a "0" for layer 1 and a "1" for layer 2.

Table 3 below presents a comparison between the first and second embodiments of the invention described above; (a) a communication system using SLM as shown in Figure 1 (i.e. transmitting the identity $\tilde{u}$ of the selected phase vector from the transmitter to the receiver); and (b) a system having a blind receiver as described with reference to Figure 2. The systems are compared in three respects, namely transmitter processing burden, receiver processing burden and signalling requirements.

**Table 3**

| System | Transmitter Processing Burden | Receiver Processing Burden | Signalling Required |
|---|---|---|---|
| Figure 1 system | High | Low | Prohibitive |
| Figure 2 system | High | Prohibitive | None |
| First embodiment | Low | Low | Medium |

(continued)

| System | Transmitter Processing Burden | Receiver Processing Burden | Signalling Required |
|---|---|---|---|
| Second embodiment | Low | Medium | Low |

Next, a variation on the second embodiment will be described. In this variation, the transmission unit does not send any information about the selected layer to the receiver either, and the receiver operates completely blindly. In this case, the receiver may either process the layers sequentially, starting with the first layer, or may process all of the layers simultaneously. To process the layers sequentially, the number of vector multipliers 156 and processing units 158 need only be equal to the number U2 of phase vectors in the set for the highest layer. If the receiver is to process trial phase vectors of all layers simultaneously, then U1 + U2 vector multipliers 156 and processing units 158 are required.

This variation on the second embodiment has the advantage that it removes entirely the signalling overhead associated with transmitting from the transmitter to the receiver any information about the phase vector selected by the transmitter. However, there is a significant penalty at the receiver in terms of processing burden as the receiver is not guided to the correct set of phase vectors by the layer information. If the receiver is a Node B (base station) it is likely to have the processing power to go blindly through all the layers to discover the phase vector without any need for the UE to send even the layer index. The processing power available in the UE is likely to be small compared to that available in the node B, so the arrangement of Figure 8 is probably better for the case in which the transmitter is the node B and the receiver is the UE.

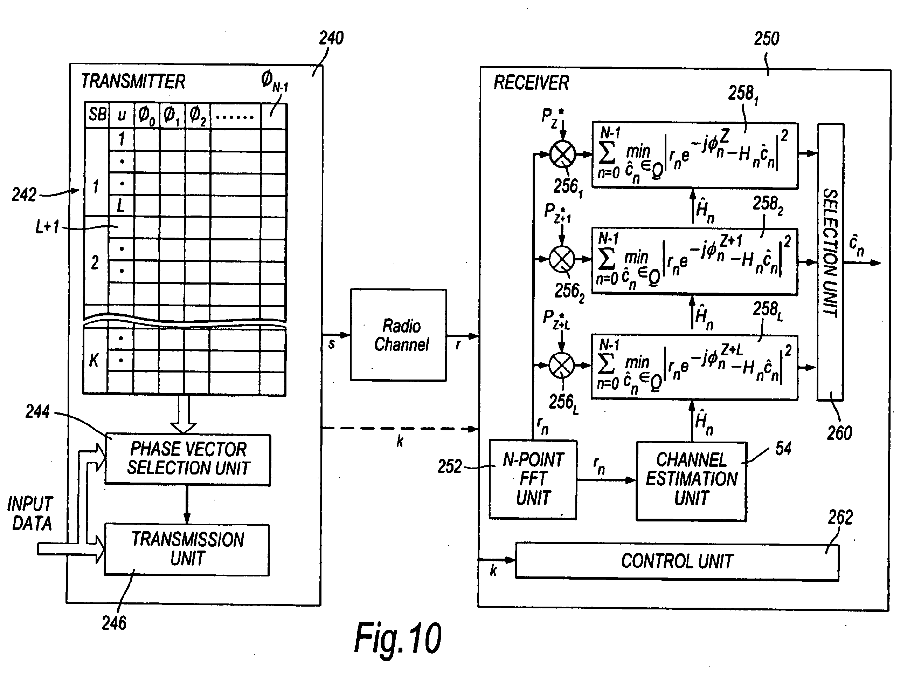

Next, a communication system not directly embodying the present invention will be described with reference to Figure 10. In Figure 10 a communication system comprises a transmitter 240 and a receiver 250. The transmitter 240 in this embodiment has a single phase vector storage unit 242 in place of the two storage units in the preceding embodiments. The phase vector storage unit 242 has capacity for storing U = K x L phase vectors. For example U may be 256, K may be 8 and L may be 32. In this way, as represented in Figure 10, the available phase vectors may be considered to be divided into K sub-blocks SB1 to SBK, each sub-block being made up of L phase vectors.

The transmitter 240 further comprises a phase vector selection unit 244 which selects that one of the U available phase vectors stored in the phase vector storage unit 242 that will provide the lowest PAPR for the current block of input data received by the transmitter 240.

The transmitter 240 also comprises a transmission unit 246 which transmits an OFDM signal formed by applying the selected phase vector to the block of data to be transmitted.

The transmitter has the same general constitution as the receiver 150 in Figure 8 and is also a semi-blind receiver. However, the receiver 250 differs from the receiver of Figure 8 in that only L vector multipliers $256_1$ to $256_L$ and L processing units $258_1$ to $258_L$ are provided in place of the U2 vector multipliers 156 and U2 processing units 158 in Figure 8. Thus, the number of vector multipliers and processing units is reduced by the factor K.

The receiver 250 also differs from the receiver 150 of Figure 8 in that it has a control unit 262 which is adapted to receive the index k of the sub-block containing the phase vector selected by the phase vector selection unit 244.

The receiver 250 further comprises a storage unit (not shown) which stores data relating to U trial phase vectors corresponding respectively to the U available phase vectors on the transmitter side. The storage unit in the receiver in this embodiment contains the same data as the phase vector storage 242 in the transmitter 240 but, alternatively, it could store data relating to the U total phase vectors in some other suitable form, for example the complex conjugate of each of the available phase vectors, as this is what is required by the vector multipliers $256_1$ to $256_L$. The U trial phase vectors are also subdivided into K sub-blocks in the same way as the U available phase vectors.

Based on the received sub-block index k, the control unit 262 determines the sub-block of trial phase vectors used to recover the data from the received signal $r_n$. In particular, the control unit 262 calculates Z = (k-1) L+1. Then, the control unit 262 retrieves from the receiver-side storage unit the data for the trial phase vectors $P_Z$ to $P_{Z+L}$ of the sub-block SBk. In this way, the complex conjugates $P_Z^*$ to $P_{Z+L}^*$ of the L trial phase vectors $P_Z$ to $P_{Z+L}$ of the sub-block SBk are applied respectively to the inputs of the vector multipliers $256_1$ to $256_L$. The processing units $258_1$ to $258_L$ then determine the minimum distance $H \otimes \hat{c}$ to $r \otimes P^*$ for each of the trial phase vectors $P_Z$ to $P_{Z+L}$ for all the possible constellation points of the modulation scheme being applied to the subcarriers. A selection unit 260 then selects the minimum-distance solution among the phase vectors $P_Z$ to $P_{Z+L}$ and this yields the output data $\hat{C}_n$.

The decision metric used in the receiver 250 is represented by

$$D_{Semi\_Blind} = \min_{\mathbf{P}_{\hat{u}}, \hat{u} \in \{1,2,\ldots,L\}} \sum_{n=0}^{N-1} \min_{\hat{c}_n \in Q} \left| r_n e^{-j\phi_n^{\hat{u}}} - H_n \hat{c}_n \right|^2 \quad (8)$$

Compared to the decision metric of equation (6) above, it can be seen that the processing burden on the receiver is reduced by a factor y, where y is

$$\gamma = \frac{Operation \left( \min_{\mathbf{P}_{\hat{u}}, \hat{u} \in \{1,2,\ldots,L\}} \sum_{n=0}^{N-1} \min_{\hat{c}_n \in Q} \left| r_n e^{-j\phi_n^{\hat{u}}} - H_n \hat{c}_n \right|^2 \right)}{Operation \left( \min_{\mathbf{P}_{\hat{u}}, \hat{u} \in \{1,2,\ldots,U\}} \sum_{n=0}^{N-1} \min_{\hat{c}_n \in Q} \left| r_n e^{-j\phi_n^{\hat{u}}} - H_n \hat{c}_n \right|^2 \right)} \approx \frac{L}{U} \quad (9)$$

For example, UU (= 1/K) may be 1/8, which represents a significant reduction in the receiver-side processing burden. Of course, transmitting the sub-block index k from the transmitter 240 to the receiver 250 does involve a signalling overhead. However, the number of bits required to transmit this index k is relatively small, for example three bits. This is a significant reduction compared to the system of Figure 1 in which the identity u of the selected phase vector is transmitted with full granularity from the transmitter to the receiver. Thus, the Figure 10 system achieves a lower signalling overhead than the Figure 1 system without imposing such a high receiver-side processing burden as a comparable system having a completely blind receiver as described previously with reference to Figure 2. Table 4 below presents a comparison between the systems of Figures 1, 2 and 10 in terms of receiver processing burden and signalling requirements.

**Table 4**

| PAPR Reduction Techniques | Receiver Processing Burden | Signalling Required |
|---|---|---|
| Figure 1 | Low | Prohibitive |
| Figure 2 | Prohibitive | None |
| Figure 10 | Low | Low |

Using simulations, the performance of the Figure 10 system was compared with that of (a) an ideal system having a transmitter with infinite amplifier-back-off, (b) a system in which the amplifier has clipping but no PAPR reduction technique, and (c) the system of Figure 1. The assumptions made for the simulations are set out in Table 5 below.

**Table 5**

| Parameter | Value |
|---|---|
| Total number of subcarriers | 128 |
| Synchronisation | Perfect |
| Modulation | QPSK and 16 QAM |
| Sampling rate | 256 samples per symbol |
| Clipping Level | 2 dB |
| Subcarrier spacing | 19.5 KHZ |
| Channel | AWGN |

(continued)

| Parameter | Value |
|-----------|-------|
| **U** | 1600 |
| **L** | 200 |

As can be seen from Table 5, U is assumed to be 1600 and L is assumed to be 200. Thus, K = 8. In the case of the system (c), U is also assumed to be 1600. The number of subcarriers is assumed to be 128.

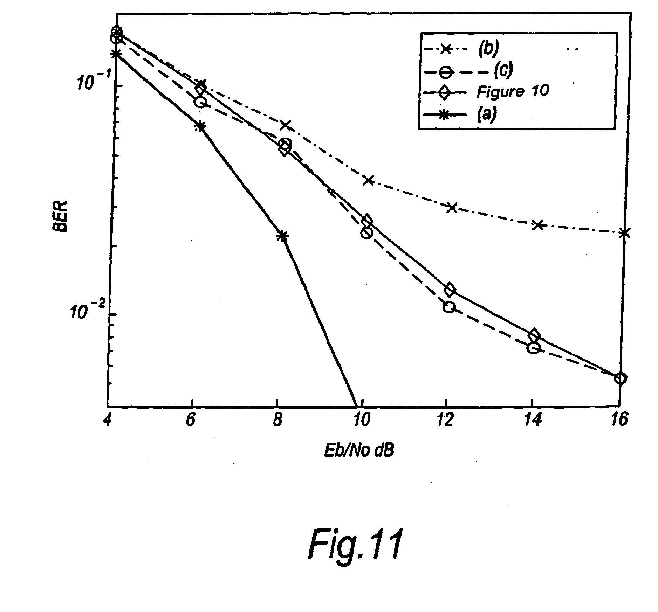

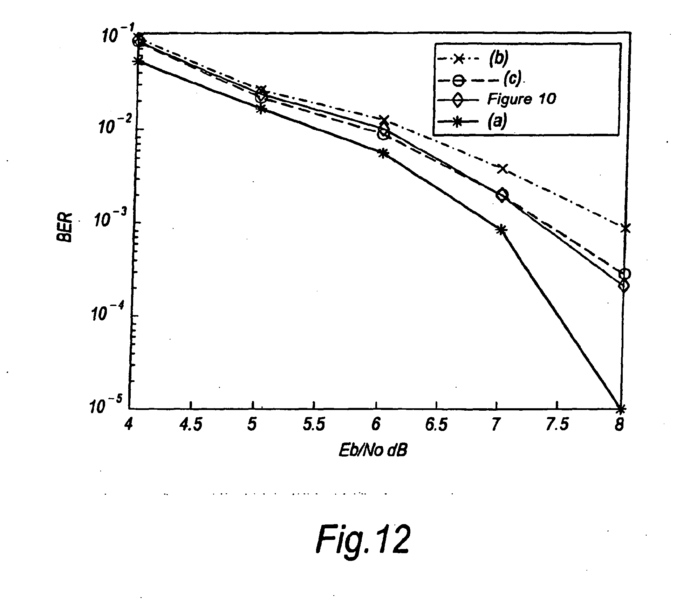

Figure 11 presents the performance of the compared systems in terms of a variation of the bit error rate (BER) with signal-to-noise ratio (Eb/No) in the case in which the modulation scheme is 16 QAM. Figure 12 is a graph corresponding to Figure 11 but comparing the performance of the systems when the modulation scheme is QPSK. It can be seen from Figures 11 and 12 that the performance of the third embodiment in terms of BER is quite similar to that of the Figure 1 system whilst the signalling requirement is eight times less than that of the Figure 1 system.

The PAPR performance of the Figure 10 system was also compared with that of the systems (a) and (c) mentioned above. The results are presented in Table 6 below. The PAPR levels in table 8 are the PAPR levels before the soft-limiting non-linear amplifier and were obtained by measuring and averaging over 10,000 independent transmission periods.

**Table 6**

| PAPR Reduction Techniques | PAPR Level |
|---------------------------|------------|
| Figure 1 | 5.8055 |
| Figure 10 | 5.8490 |
| No PAPR Reduction | 9.1578 |

It can be seen that the PAPR reduction achieved by the Figure 10 system is very close to that of the Figure 1 system.

It will be appreciated that the features of the embodiments described above may be combined. For example, two or more layers may be defined as in the first embodiment, the set for the first layer having fewer phase vectors than the set for the second layer. When the first layer is selected by the transmitter, the receiver may operate fully blindly, i.e. the transmitter may simply supply the layer index alone to the receiver. The receiver would then search through all U1 phase vectors of the first set to find the selected phase vector. The second set of vectors for layer 2 may be subdivided into sub-blocks as in the Figure 10 system. Then, when the second layer is selected, instead of merely sending the layer index, the transmitter may also send the sub-block index k as well. In this way, even though the set of vectors for layer 2 contains many more vectors than the set for layer 1, the processing burden on the receiver is kept manageable because the search is "guided" by the sub-block index.

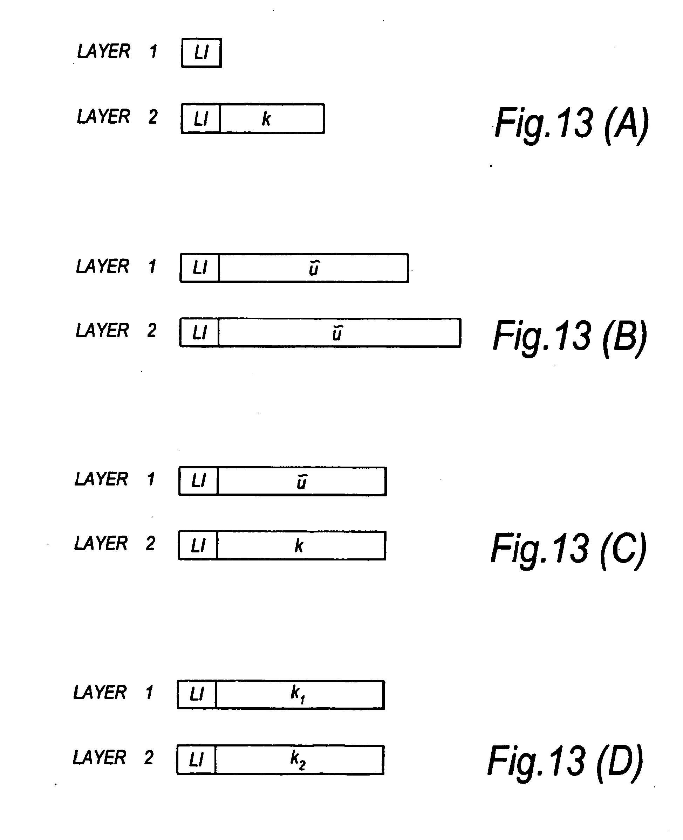

The signalling in such an implementation is shown schematically in Figure 13(A). It can be seen that the identifying information transmitted by the transmitter to the receiver is different when layer 1 is selected from the identifying information when layer 2 is selected. In this case the identifying information differs in (a) an amount of the information (1 bit for layer 1 and k+1 bits for layer 2) and in (b) a format of the information (LI alone for layer 1, LI and k together for layer 2) and in (c) in granularity of the information (the lowest possible granularity, i.e. "the entire set", for layer 1 and a higher granularity, i.e. "one sub-block of the set", for layer 2). By permitting the identifying information to vary from one layer to another, a system embodying the invention can control the signalling burden associated with the identifying information.

It is not necessary for the identifying information to differ in all of the respects (a) to (c). For example, in the first embodiment in which U1<U2, the identifying information for layer 1 differs from the identifying information for layer 2 in the amount of information ($\log_2(U1)$ + 1 bits for layer 1 and $\log_2(U2)$ + 1 bits for layer 2) but the format (LI and U1/U2) and the granularity (the highest possible, i.e. one phase vector uniquely identified) are the same, as shown in Figure 13(B).

Figure 13(C) shows another example in which the format and amount of information are the same but the granularity for layer 1 is the highest possible whereas the granularity for layer 2 is lower. This can be useful if, say, it is desirable in the system for the amount of information to be the same for both layers but layer 2 has a set of more phase vectors than layer 1. In Figure 13(D) the transmitter transmits a layer index and a sub-block index for each of the layers to reduce the processing burden at the receiver. The format and amount of information are again the same for both layers but layer 1 has a first granularity and layer 2 has a second granularity lower than the first granularity. For example, a sub-block index $k_1$ for layer 1 and a sub-block index $k_2$ for layer 2 may have the same number of bits by making a number L2 of phase vectors in each sub-block of layer 2 larger than a number L1 of phase vectors in each sub-block of layer 1.

In the embodiments of the invention, the various units, such as the processing unit, may be implemented by a processor such as a DSP running appropriate software. By reducing the processing burden a processor having a lower processing capacity may be used, saving cost. Of course, the units may be implemented in hardware, in which case a reduction in processing burden may enable the amount of hardware to be reduced, also saving cost.

**Claims**

1. A communication method in which a transmitter (40; 140) transmits data to one or more receivers (50; 150) using a plurality of subcarriers simultaneously, the method comprising:

   at the transmitter, selecting (S4, S6, S8) a suitable phase vector ($P\widetilde{u}$) from among a plurality of available phase vectors to apply to the data to be transmitted, each said available phase vector comprising a plurality of phase elements ($\Phi_0 \sim \Phi_{N-1}$) each of which corresponds to one or more of said subcarriers and sets a phase adjustment to be applied by the transmitter to said corresponding subcarrier(s);

   **characterised in that** the selection of the suitable phase vector ($P\widetilde{u}$) is initially limited (S2, S3) to consideration in a parallel manner of phase vectors belonging to a first set of the available phase vectors within the plurality of available phase vectors, and is expanded (S7) to further phase vectors outside said first set when no suitable phase vector is found in said first set (S6).

2. A method as claimed in any preceding claim, wherein in the selection of the suitable phase vector a suitability of such an available phase vector is based on a peak-to-average power ratio reduction achievable by applying the phase vector concerned to the data to be transmitted.

3. A method as claimed in claim 1 or 2, wherein the phase vectors of said first set are fewer in number (U1) than said further phase vectors (U2) outside said first set.

4. A method as claimed in claim 1, 2 or 3, wherein the transmitter transmits to the one or more receivers identifying information ($\widetilde{u}$) identifying the selected phase vector, and an amount of said identifying information is smaller when the selected phase vector belongs to the first set than when the selected phase vector is one of said further phase vectors outside said first set.

5. A method as claimed in any preceding claim, wherein:

   the plurality of available phase vectors are organised in a hierarchy of layers, said first set of phase vectors corresponding to a first one of said layers, and there being a second set of phase vectors corresponding to a second one of said layers, and so on for each higher layer, if any, of the hierarchy of layers; and
   the selection of the suitable phase vector is expanded from one set to the next in accordance with said hierarchy of layers.

6. A method as claimed in claim 5, wherein the set corresponding to a given one of said layers has fewer phase vectors than the set corresponding to a higher layer.

7. A method as claimed in claim 6, wherein said first set has a threshold value for peak-to-average power ratio reduction, and it is judged (S6) that there is no suitable phase vector in said first set if none of the phase vectors in said first set is able to achieve a peak-to-average power ratio reduction above said threshold value for said first set.

8. A method as claimed in claim 7. wherein there is such a threshold value for each set other than the set corresponding to the highest layer, and for each set in turn other than the set corresponding to the highest layer it is judged that there is no suitable phase vector in that set if none of the phase vectors in that set is able to achieve a peak-to-average power ratio reduction above said threshold value for that set

9. A method as claimed in claim 8, wherein the threshold value for the set corresponding to a given one of said layers is lower than the threshold value for the set corresponding to a higher layer.

10. A method as claimed in claim 7, 8 or 9, wherein for at least one set all the phase vectors of the set are considered (S4) and the phase vector that is able to achieve the highest peak-to-average power ratio reduction is selected (S6) as the suitable phase vector provided that the reduction concerned is above said threshold value for the set.

11. A method as claimed in any one of claims 1 to 9, wherein for at least one set the phase vectors of the set are considered sequentially for suitability, and when a first suitable phase vector is found any remaining phase vectors of the set are not considered.

12. A method as claimed in any preceding claim, wherein the transmitter transmits to the one or more receivers set information (LI) for use by the one or more receivers to identify the set to which the selected phase vector belongs.

13. A method as claimed in claim 12, wherein:

the one or more receivers have a plurality of trial phase vectors corresponding respectively to the plurality of available phase vectors of the transmitter, and
the one or more receivers employ the set information to identify the set to which the selected phase vector belongs, and process the received plurality of signals only with those trial phase vectors that correspond respectively to the available phase vectors of the identified set to recover the data from the received plurality of signals.

14. A method as claimed in any one of claims 1 to 11, wherein:

the one or more receivers receive a multi-carrier signal (r) transmitted by the transmitter:
the one or more receivers have a plurality of trial phase vectors corresponding respectively to the plurality of available phase vectors of the transmitter; and
the one or more receivers initially process the received multi-carrier signal with those trial phase vectors that correspond respectively to the available phase vectors of the first set of available phase vectors to recover the data from the received multi-carrier signal, and expand the trial phase vectors to further trial phase vectors corresponding respectively to available phase vectors outside said first set when satisfactory data recovery is not achieved with any of the trial phase vectors that correspond respectively to the available phase vectors of the first set.

15. A method as claimed in any one of claims 1 to 12, wherein at least one set is subdivided into a plurality of subsets, and the transmitter (240) transmits to the one or more receivers (250) subset information (k) for use by the one or more receivers to identify the subset to which the selected phase vector belongs.

16. A method as claimed in claim 15, wherein:

the one or more receivers receive a multi-carrier signal (r) transmitted by the transmitter;
the one or more receivers have a plurality of trial phase vectors corresponding respectively to the plurality of available phase vectors of the transmitter; and
the one or more receivers employ the subset information (k) to identify the subset to which the selected phase vector belongs, and process the received multi-carrier signal only with those trial phase vectors that correspond respectively to the available phase vectors of the identified subset to recover the data from the received multi-carrier signal.

17. A transmitter (40; 140) adapted to transmit data to one or more receivers (50; 150) using a plurality of subcarriers simultaneously, the transmitter comprising:

phase vector selecting means (44; 144) for selecting a suitable phase vector ($P\tilde{u}$) from among a plurality of available phase vectors to apply to the data to be transmitted, each said available phase vector comprising a plurality of phase elements ($\Phi_0 \sim \Phi_{N-1}$) each of which corresponds to one or more of said subcarriers and sets a phase adjustment to be applied by the transmitter to said corresponding subcarrier(s);

**characterised in that** the phase vector selecting means is operable initially to limit the selection of the suitable phase vector to consideration in a parallel manner of phase vectors belonging to a first set of the available phase vectors within the plurality of phase vectors, and is further operable to expand the selection to further phase vectors outside said first set when no suitable phase vector is found in said first set.

**18.** A receiver (150) adapted to receive a multi-carrier signal (r) transmitted by a transmitter using a plurality of subcarriers simultaneously, the transmitter having applied to data to be transmitted a phase vector (P$\tilde{u}$) selected from among a plurality of available phase vectors, each said available phase vector comprising a plurality of phase elements each of which corresponds to one or more of said subcarriers and sets a phase adjustment applied by the transmitter to said corresponding subcarrier(s), said receiver comprising:

> processing means (152-162) for processing the received multi-carrier signal with trial phase vectors of a plurality of trial phase vectors to recover said data from the received multi-carrier signal, said plurality of trial phase vectors corresponding respectively to the plurality of available phase vectors of the transmitter;

> **characterised by**:

> limiting means operable to limit the processing by said processing means initially to consideration in a parallel manner of trial phase vectors of a first set of trial phase vectors within the plurality of trial phase vectors, and also operable to expand the processing to further phase vectors outside said first set if satisfactory data recovery is not achieved with any of the trial phase vectors of said first set.

**19.** A program for execution by a processor in a transmitter (40; 140) adapted to transmit data to one or more receivers (50; 150) using a plurality of subcarriers simultaneously, the program when executed causing the transmitter to select (S4, S6, S8) a suitable phase vector (P$\tilde{u}$) from among a plurality of available phase vectors to apply to the data to be transmitted, each said available phase vector comprising a plurality of phase elements ($\Phi_0 \sim \Phi_{N-1}$) each of which corresponds to one or more of said subcarriers and sets a phase adjustment to be applied by the transmitter to said corresponding subcarrier(s);
**characterised in that** the selection of the suitable phase vector (P$\tilde{u}$) is initially limited (S2, S3) to consideration in a parallel manner of phase vectors belonging to a first set of the available phase vectors within the plurality of phase vectors, and the selection is expanded (S7) to further phase vectors outside said first set when no suitable phase vector is found in said first set (S6).

**20.** A program for execution by a processor in a receiver (50; 150) adapted to receive a multi-carrier signal (r) transmitted by a transmitter (40; 140) using a plurality of subcarriers simultaneously, the transmitter having applied to data to be transmitted a phase vector (P$\tilde{u}$) selected from among a plurality of available phase vectors, each said available phase vector comprising a plurality of phase elements each of which corresponds to one or more of said subcarriers and sets a phase adjustment applied by the transmitter to said corresponding subcarrier(s), said program when executed causing the receiver to process the received multi-carrier signal with trial phase vectors of a plurality of trial phase vectors to recover said data from the received multi-carrier signal, said plurality of trial phase vectors corresponding respectively to the plurality of available phase vectors of the transmitter;
**characterised in that** the processing is limited initially to consideration in a parallel manner of trial phase vectors of a first set of trial phase vectors within the plurality of trial phase vectors, and the processing is expanded to further phase vectors outside said first set if satisfactory data recovery is not achieved with any of the trial phase vectors of said first set.

**21.** A base station of a wireless communication system comprising the transmitter of claim 17 or the receiver of claim 18.

**22.** A mobile station of a wireless communication system comprising the transmitter of claim 17 or the receiver of claim 18.

**Patentansprüche**

**1.** Kommunikationsverfahren, bei welchem ein Transmitter (40; 140) Daten zu einem oder mehreren Empfänger(n) (50; 150) unter gleichzeitiger Verwendung einer Mehrzahl von Unterträgern überträgt, welches Verfahren enthält:

> Auswählen (S4, S6, S8) eines geeigneten Phasenvektors (P$\tilde{u}$) an dem Transmitter unter einer Mehrzahl von verfügbaren Phasenvektoren zur Anwendung auf die Daten, die übertragen werden sollen, wobei jeder verfügbare Phasenvektor eine Mehrzahl von Phasenelementen ($\phi_0 \sim \phi_{N-1}$) enthält, wovon jedes einem oder mehreren Unterträger(n) entspricht und eine Phaseneinstellung, die durch den Transmitter anzuwenden ist, auf den/die entsprechenden Unterträger einstellt;

> **dadurch gekennzeichnet, dass** die Auswahl des geeigneten Phasenvektors (P$\tilde{u}$) anfänglich beschränkt ist (S2, S3) auf eine parallele Berücksichtigung von Phasenvektoren, die zu einem ersten Satz der verfügbaren Phasenvektoren innerhalb der Mehrzahl von verfügbaren Phasenvektoren gehören, und auf weitere Phasenvektoren außerhalb des ersten Satzes ausgedehnt wird (S7), wenn kein geeigneter Phasenvektor in dem ersten Satz gefunden wird (S6).

2. Verfahren nach jeglichem vorhergehenden Anspruch, wobei bei der Auswahl des geeigneten Phasenvektors eine Eignung eines solchen verfügbaren Phasenvektors auf einer Spitzen-zu-Durchschnittsleistungsverhältnisreduktion basiert, die durch Anwenden des betroffenen Phasenvektors auf die Daten erzielbar ist, die übertragen werden sollen.

3. Verfahren nach Anspruch 1 oder 2, wobei die Phasenvektoren des ersten Satzes zahlenmäßig (U1) geringer als die weiteren Phasenvektoren (U2) außerhalb des ersten Satzes sind.

4. Verfahren nach Anspruch 1, 2 oder 3, wobei der Transmitter zu dem einen oder den mehreren Empfänger(n) Identifizierinformationen ($\bar{u}$) überträgt, die den ausgewählten Phasenvektor identifizieren, und ein Umfang der Identifizierinformationen geringer ist, wenn der ausgewählte Phasenvektor zu dem ersten Satz gehört als wenn der ausgewählte Phasenvektor einer der weiteren Phasenvektoren außerhalb des ersten Satzes ist.

5. Verfahren nach einem der vorhergehenden Ansprüche, wobei:

die Mehrzahl von verfügbaren Phasenvektoren in einer Hierarchie von Schichten organisiert ist, welcher erste Satz von Phasenvektoren einer ersten der Schichten entspricht, und es einen zweiten Satz von Phasenvektoren gibt, der einer zweiten der Schichten entspricht, und so weiter ggf. für jede höhere Schicht der Hierarchie von Schichten; und
die Auswahl des geeigneten Phasenvektors von einem Satz zu dem nächsten gemäß der Hierarchie von Schichten ausgedehnt wird.

6. Verfahren nach Anspruch 5, wobei der Satz, der einer gegebenen der Schichten entspricht, weniger Phasenvektoren als der Satz hat, der einer höheren Schicht entspricht.

7. Verfahren nach Anspruch 6, wobei der erste Satz einen Schwellenwert für die Spitzen-zu-Durchschnittsleistungsverhältnisreduktion hat und entschieden wird (S6), dass es keinen geeigneten Phasenvektor in dem ersten Satz gibt, wenn keiner der Phasenvektoren in dem ersten Satz in der Lage ist, eine Spitzen-zu-Durchschnittsleistungsverhältnisreduktion über dem Schwellenwert für den ersten Satz zu erzielen.

8. Verfahren nach Anspruch 7, wobei es einen solchen Schwellenwert für jeden Satz außer dem Satz gibt, der der höchsten Schicht entspricht, und für jeden Satz wiederum mit Ausnahme des Satzes, der der höchsten Schicht entspricht, entschieden wird, das es keinen geeigneten Phasenvektor in jenem Satz gibt, wenn keiner der Phasenvektoren in jenem Satz in der Lage ist, eine Spitzen-zu-Durchschnittsleistungsverhältnisreduktion über den Schwellenwert für jenen Satz zu erzielen.

9. Verfahren nach Anspruch 8, wobei der Schwellenwert für den Satz, der einer gegebenen der Schichten entspricht, niedriger als der Schwellenwert für den Satz ist, der einer höheren Schicht entspricht.

10. Verfahren nach Anspruch 7, 8 oder 9, wobei für wenigstens einen Satz alle Phasenvektoren des Satzes berücksichtigt werden (S4) und der Phasenvektor, der in der Lage ist, die höchste Spitzen-zu-Durchschnittsleistungsverbeltnisreduktion zu erzielen, als der geeignete Phasenvektor ausgewählt wird (6), vorausgesetzt, dass die betroffene Reduktion oberhalb des Schwellenwertes für den Satz ist.

11. Verfahren nach einem der Ansprüche 1 bis 9, wobei für wenigstens einen Satz die Phasenvektoren des Satzes sequentiell für die Eignung berücksichtigt werden, und, wenn ein erster geeigneter Phasenvektor gefunden ist, jegliche verbleibenden Phasenvektoren des Satzes nicht berücksichtigt werden.

12. Verfahren nach einem der vorhergehenden Ansprüche, wobei der Transmitter zu dem einen oder den mehreren Empfänger(n) Satzinformationen (LI) zur Verwendung durch den einen oder die mehreren Empfänger überträgt, um den Satz zu identifizieren, zu welchem der ausgewählte Phasenvektor gehört.

13. Verfahren nach Anspruch 12, wobei:

der eine oder die mehreren Empfänger eine Mehrzahl von Probephasenvektoren hat/haben, der/die jeweils der Mehrzahl von verfügbaren Phasenvektoren des Transmitters entspricht/ entsprechen; und

der eine oder die mehreren Empfänger die Satzinformationen einsetzt/einsetzen, um den Satz zu identifizieren, zu welchem der ausgewählte Phasenvektor gehört, und die empfangene Mehrzahl von Signalen nur mit jenen Probephasenvektoren verarbeiten, die jeweils den verfügbaren Phasenvektoren des identifizierten Satzes entsprechen, um die Daten von der empfangenen Mehrzahl von Signalen wieder zu erlangen.

**14.** Verfahren nach einem der Ansprüche 1 bis 11, wobei:

der eine oder die mehreren Empfänger ein Mehrträgersignal (r) empfängt/empfangen, das von dem Transmitter übertragen wurde;

der eine oder die mehreren Empfänger eine Mehrzahl von Probephasenvektoren hat/haben, der/die jeweils der Mehrzahl von verfügbaren Phasenvektoren des Transmitters entspricht/ entsprechen; und

der eine oder die mehreren Empfänger anfänglich das empfangene Mehrträgersignal mit jenen Probephasenvektoren verarbeitet/verarbeiten, die jeweils den verfügbaren Phasenvektoren des ersten Satzes von verfügbaren Phasenvektoren entsprechen, um die Daten von dem empfangenen Mehrträgersignal wieder zu erlangen, und die Probephasenvektoren auf weitere Probephasenvektoren ausdehnt/ausdehnen, die jeweils verfügbaren Phasenvektoren außerhalb des ersten Satzes entsprechen, wenn eine befriedigende Datenwiedererlangung nicht mit einem der Probephasenvektoren erzielt wird, die jeweils den verfügbaren Phasenvektoren des ersten Satzes entsprechen.

**15.** Verfahren nach einem der Ansprüche 1 bis 12, wobei wenigstens ein Satz in eine Mehrzahl von Untersätzen unterteilt ist, und der Transmitter (240) zu dem einen oder den mehreren Empfänger(n) (250) Untersatzinformationen (k) zur Verwendung durch den einen oder die mehreren Empfänger überträgt, um den Untersatz zu identifizieren, zu welchem der ausgewählte Phasenvektor gehört.

**16.** Verfahren nach Anspruch 15, wobei:

der eine oder die mehreren Empfänger ein Mehrträgersignal (r) empfängt/empfangen, das durch den Transmitter übertragen wurde;

der eine oder die mehreren Empfänger eine Mehrzahl von Probephasenvektoren hat/haben, die jeweils der Mehrzahl von verfügbaren Phasenvektoren des Transmitters entsprechen; und

der eine oder die mehreren Empfänger die Untersatzinformationen (k) einsetzt/einsetzen, um den Untersatz zu identifizieren, zu welchem der ausgewählte Phasenvektor gehört, und das empfangene Mehrträgersignal nur mit jenen Probephasenvektoren verarbeitet/verarbeiten, die jeweils den verfügbaren Phasenvektoren des identifizierten Untersatzes entsprechen, um die Daten von dem empfangenen Mehrträgersignal wieder zu erlangen.

**17.** Transmitter (40; 41) ausgelegt zum Übertragen von Daten zu einem oder mehreren Empfänger(n) (50; 150) unter gleichzeitiger Verwendung einer Mehrzahl von Unterträgern, welcher Transmitter enthält:

Phasenvektorauswahleinrichtungen (44; 144) zum Auswählen eines geeigneten Phasenvektors ($P\tilde{u}$) aus einer Mehrzahl von verfügbaren Phasenvektoren zur Anwendung auf die Daten, die übertragen werden sollen, wobei jeder der verfügbaren Phasenvektoren eine Mehrzahl von Phasenelementen ($\phi_0 \sim \phi_{N-1}$) enthält, wovon jedes einem oder mehreren der Unterträger entspricht, und eine Phaseneinstellung einstellt, die durch den Transmitter auf den/die entsprechenden Unterträger angewandt werden soll;

**dadurch gekennzeichnet, dass** die Phasenvektorauswahleinrichtungen anfänglich betrcibbar sind, um die Auswahl des geeigneten Phasenvektor auf eine parallele Berücksichtigung von Phasenvektoren, die zu einem ersten Satz der verfügbaren Phasenvektoren innerhalb der Mehrzahl von Phasenvektoren gehören, zu beschränken, und ferner betreibbar ist, um die Auswahl auf weitere Phasenvektoren außerhalb des ersten Satzes auszudehnen, wenn kein geeigneter Phasenvektor in dem ersten Satz gefunden wird.

**18.** Empfänger (150), ausgelegt zum Empfangen eines Mehrträgersignals (r), das von einem Transmitter unter gleichzeitiger Verwendung einer Mehrzahl von Unterträgern übertragen wird, welcher Transmitter auf Daten, die übertragen werden sollen, einen Phasenvektor ($P\tilde{u}$) angewandt hat, der aus einer Mehrzahl von verfügbaren Phasenvektoren ausgewählt wurde, wobei jeder der verfügbaren Phasenvektoren eine Mehrzahl von Phasenelementen enthält, wovon jedes einem oder mehreren der Unterträger entspricht, und eine Phaseneinstellung einstellt, die durch den Transmitter auf den/die entsprechenden Unterträger angewandt wird, welcher Empfänger enthält:

verarbelCungseinrirhtungen (152 - 162) zum Verarbeiten des empfangenen Mehrträgersignals mit Probephasenvektoren einer Mehrzahl von Probephasenvektoren, um die Daten von dem empfangenen Mehrträgersignal wieder zu erlangen, welche Mehrzahl von Probephasenvektoren jeweils der Mehrzahl von verfügbaren Phasenvektoren des Transmitters entspricht;

**gekennzeichnet durch**:

Begrenzungseinrichtungen, die betreibbar sind, um die Verarbeitung **durch** die Verarbeitungseinrichtungen anfangs auf eine parallele Berücksichtigung von Probephasenvektoren eines ersten Satzes von Probephasenvektoren innerhalb der Mehrzahl von Probephasenvektoren zu beschränken, und auch betreibbar sind, um die weitere Verarbeitung auf weitere Phasenvektoren außerhalb des ersten Satzes auszudehnen, wenn eine befriedigende Datenwiedererlangung mit jeglichem der Probephasenvektoren des ersten Satzes nicht erzielt wird.

19. Programm zur Ausführung durch einen Prozessor in einem Transmitter (40; 140), der ausgelegt ist, um Daten von einem oder mehreren Empfänger(n) (50; 150) unter gleichzeitiger Verwendung einer Mehrzahl von Unterträgern zu übertragen, wobei das Programm, das ausgeführt wird, den Transmitter veranlasst, einen geeigneten Phasenvektor ($P\tilde{u}$) unter einer Mehrzahl von verfügbaren Phasenvektoren zur Anwendung auf die Daten auszuwählen (S4, S6, S8), die übertragen werden sollen, wobei jeder verfügbare Phasenvektor einen Mehrzahl von Phasenelementen ($\phi_0 \sim \phi_{N-1}$) enthält, wovon jedes einem oder mehreren Unterträger(n) entspricht, und eine Phaseneinstellung einstellt, die durch den Transmitter auf den/die entsprechenden Unterträger angewandt werden soll:
   **dadurch gekennzeichnet, dass** die Auswahl des geeigneten Phasenvektors ($P\tilde{u}$) anfänglich auf eine parallele Berücksichtigung von Phasenvektoren begrenzt (S2, S3) ist, die zu einem ersten Satz der verfügbaren Phasenvektoren innerhalb der Mehrzahl von Phasenvektoren gehören, und die Auswahl auf weitere Phasenvektoren außerhalb des ersten Satzes ausgedehnt (S7) wird, wenn kein geeigneter Phasenvektor in dem ersten Satz gefunden wird (S6).

20. Programm zum Ausführen durch einen Prozessor in einem Empfänger (50; 150), der ausgelegt ist, um ein Mehrträgersignal (r) zu empfangen, das von einem Transmitter (40; 140) unter gleichzeitiger Verwendung einer Mehrzahl von Unterträgern übertragen wurde, welcher Transmitter auf Daten, die übertragen werden sollen, einen Phasenvektor ($P\tilde{u}$) angewandt hat, der aus einer Mehrzahl von verfügbaren Phasenvektoren ausgewählt wurde, wobei jeder verfügbare Phasenvektor eine Mehrzahl von Phasenelementen enthält, wovon jedes einem oder mehreren der Unterträger entspricht, und eine Phaseneinstellung, die durch den Transmitter auf den/die entsprechenden Unterträger angewandt wird, einstellt, welches Programm, wenn es ausgeführt wird, den Empfänger veranlasst, das empfangene Mehrträgersignal mit Probephasenvektoren einer Mehrzahl von Probephasenvektoren zu verarbeiten, um die Daten von dem empfangenen Mehrträgersignal wieder zu erlangen, welche Mehrzahl von Probephasenvektoren jeweils der Mehrzahl von verfügbaren Phasenvektoren des Transmitters entspricht;
   **dadurch gekennzeichnet, dass** das Verarbeiten anfangs auf eine parallele Berücksichtigung von Probephasenvektoren eines ersten Satzes von Probephasenvektoren innerhalb der Mehrzahl von Probephasenvektoren beschränkt ist, und das Verarbeiten auf weitere Phasenvektoren außerhalb des ersten Satzes ausgedehnt wird, wenn eine befriedigende Datenwiedererlangung mit jeglichem der Probephasenvektoren des ersten Satzes nicht erzielt wird.

21. Basisstation eines drahtlosen Kommunikationssystems, enthaltend den Transmitter von Anspruch 17 oder den Empfänger von Anspruch 18.

22. Mobilstation eines drahtlosen Kommunikationssystems, enthaltend den Transmitter von Anspruch 17 oder den Empfänger von Anspruch 18.

**Revendications**

1. Procédé de communication dans lequel un émetteur (40 ; 140) émet des données vers un ou plusieurs récepteurs (50 ; 150) en utilisant une pluralité de sous-porteuses simultanément, le procédé comprenant :

au niveau de l'émetteur, la sélection (S4, S6, S8) d'un vecteur de phase approprié ($P\tilde{u}$) parmi une pluralité de vecteurs de phase disponibles à appliquer aux données devant être transmises, chaque dit vecteur de phase disponible comprenant une pluralité d'éléments de phase ($\Phi_0 \sim \Phi_{N-1}$) dont chacun correspond à une ou plusieurs desdites sous-porteuses et définit un réglage de phase devant être appliqué par l'émetteur à ladite (auxdites) sous-porteuse(s) correspondante(s) ;

**caractérisé en ce que** la sélection du vecteur de phase approprié ($P\tilde{u}$) est limitée au départ (S2, S3) à la prise en compte, d'une manière parallèle, des vecteurs de phase appartenant à un premier ensemble des vecteurs de phase disponibles dans la pluralité de vecteurs de phase disponibles, et est étendue (S7) à des vecteurs de phase supplémentaires en dehors dudit premier ensemble lorsqu'aucun vecteur de phase approprié n'est trouvé dans ledit premier ensemble (S6).

2. Procédé selon l'une quelconque des revendications précédentes, dans lequel dans la sélection du vecteur de phase approprié, une aptitude d'un tel vecteur de phase disponible est basée sur une réduction du rapport puissance de crête sur puissance moyenne pouvant être obtenue en appliquant le vecteur de phase concerné aux données devant être transmises.

3. Procédé selon la revendication 1 ou 2, dans lequel les vecteurs de phase dudit premier ensemble sont inférieurs en nombre (U1) auxdits vecteurs de phase supplémentaires (U2) en dehors dudit premier ensemble.

4. Procédé selon la revendication 1, 2 ou 3, dans lequel l'émetteur émet vers les un ou plusieurs récepteurs des informations d'identification ($\tilde{u}'$) identifiant le vecteur de phase sélectionné, et une quantité desdites informations d'identification est plus petite lorsque le vecteur de phase sélectionné appartient au premier ensemble que lorsque le vecteur de phase sélectionné est l'un desdits vecteurs de phase supplémentaires en dehors dudit premier ensemble.

5. Procédé selon l'une quelconque des revendications précédentes, dans lequel :

la pluralité de vecteurs de phase disponibles sont organisés en une hiérarchie de couches, ledit premier ensemble de vecteurs de phase correspondant à une première desdites couches, et y ayant un second ensemble de vecteurs de phase correspondant à une seconde desdites couches, et ainsi de suite pour chaque couche supérieure, le cas échéant, de la hiérarchie de couches ; et
la sélection du vecteur de phase approprié est étendue d'un ensemble au suivant selon ladite hiérarchie de couches.

6. Procédé selon la revendication 5, dans lequel l'ensemble correspondant à une couche donnée desdites couches a moins de vecteurs de phase que l'ensemble correspondant à une couche supérieure.

7. Procédé selon la revendication 6, dans lequel ledit premier ensemble a une valeur de seuil pour une réduction du rapport puissance de crête sur puissance moyenne, et il est jugé (S6) qu'il n'y a pas de vecteur de phase approprié dans ledit premier ensemble si aucun des vecteurs de phase dans ledit premier ensemble n'est capable d'atteindre une réduction du rapport puissance de crête sur puissance moyenne au-dessus de ladite valeur de seuil pour ledit premier ensemble.

8. Procédé selon la revendication 7, dans lequel il y a une telle valeur de seuil pour chaque ensemble autre que l'ensemble correspondant à la couche la plus haute, et pour chaque ensemble, à tour de rôle, autre que l'ensemble correspondant à la couche la plus haute, il est jugé qu'il n'y a pas de vecteur de phase approprié dans cet ensemble si aucun des vecteurs de phase dans cet ensemble n'est capable d'atteindre une réduction du rapport puissance de crête sur puissance moyenne au-dessus de ladite valeur de seuil pour cet ensemble.

9. Procédé selon la revendication 8, dans lequel la valeur de seuil pour l'ensemble correspondant à une couche donnée desdites couches est inférieure à la valeur de seuil pour l'ensemble correspondant à une couche supérieure.

10. Procédé selon la revendication 7, 8 ou 9, dans lequel pour au moins un ensemble, tous les vecteurs de phase de l'ensemble sont pris en compte (S4) et le vecteur de phase qui est capable d'atteindre la réduction du rapport puissance de crête sur puissance moyenne la plus élevée est sélectionné (S6) comme vecteur de phase approprié dans la mesure où la réduction concernée est au-dessus de ladite valeur de seuil pour l'ensemble.

11. Procédé selon l'une quelconque des revendications 1 à 9, dans lequel pour au moins un ensemble, les vecteurs de phase de l'ensemble sont pris en compte séquentiellement pour l'aptitude, et lorsqu'un premier vecteur de phase approprié est trouvé, tous les vecteurs de phase restants de l'ensemble ne sont pas pris en compte.

**12.** Procédé selon l'une quelconque des revendications précédentes, dans lequel l'émetteur émet vers les un ou plusieurs récepteurs des informations d'ensemble (LI) destinées à être utilisées par les un ou plusieurs récepteurs pour identifier l'ensemble auquel appartient le vecteur de phase sélectionné.

**13.** Procédé selon la revendication 12, dans lequel :

les un ou plusieurs récepteurs ont une pluralité de vecteurs de phase d'essai correspondant respectivement à la pluralité de vecteurs de phase disponibles de l'émetteur ; et

les un ou plusieurs récepteurs emploient les informations d'ensemble pour identifier l'ensemble auquel appartient le vecteur de phase sélectionné, et traitent la pluralité de signaux reçus uniquement avec ces vecteurs de phase d'essai, qui correspondent respectivement aux vecteurs de phase disponibles de l'ensemble identifié pour récupérer les données à partir de la pluralité de signaux reçus.

**14.** Procédé selon l'une quelconque des revendications 1 à 11, dans lequel :

les un ou plusieurs récepteurs reçoivent un signal multiporteuse (r) émis par l'émetteur ;

les un ou plusieurs récepteurs ont une pluralité de vecteurs de phase d'essai correspondant respectivement à la pluralité de vecteurs de phase disponibles de l'émetteur ; et

les un ou plusieurs récepteurs traitent au départ le signal multiporteuse reçu avec ces vecteurs de phase d'essai,

qui correspondent respectivement aux vecteurs de phase disponibles du premier ensemble de vecteurs de phase disponibles pour récupérer les données à partir du signal multiporteuse reçu, et étendent les vecteurs de phase d'essai à des vecteurs de phase d'essai supplémentaires correspondant respectivement aux vecteurs de phase disponibles en dehors dudit premier ensemble lorsqu'une récupération de données satisfaisante n'est obtenue avec aucun des vecteurs de phase d'essai qui correspondent respectivement aux vecteurs de phase disponibles du premier ensemble.

**15.** Procédé selon l'une quelconque des revendications 1 à 12, dans lequel au moins un ensemble est subdivisé en une pluralité de sous-ensembles, et l'émetteur (240) émet vers les un ou plusieurs récepteurs (250) des informations de sous-ensemble (k) destinées à être utilisées par les un ou plusieurs récepteurs pour identifier le sous-ensemble auquel appartient le vecteur de phase sélectionné.

**16.** Procédé selon la revendication 15, dans lequel :

les un ou plusieurs récepteurs reçoivent un signal multiporteuse (r) émis par l'émetteur ;

les un ou plusieurs récepteurs ont une pluralité de vecteurs de phase d'essai correspondant respectivement à la pluralité de vecteurs de phase disponibles de l'émetteur ; et

les un ou plusieurs récepteurs emploient les informations de sous-ensemble (k) pour identifier le sous-ensemble auquel appartient le vecteur de phase sélectionné et traitent le signal multiporteuse reçu uniquement avec ces vecteurs de phase d'essai,

qui correspondent respectivement aux vecteurs de phase disponibles du sous-ensemble identifié pour récupérer les données à partir du signal multiporteuse reçu.

**17.** Émetteur (40 ; 140) conçu pour émettre des données vers un ou plusieurs récepteurs (50 ; 150) en utilisant une pluralité de sous-porteuses simultanément, l'émetteur comprenant :

un moyen de sélection de vecteur de phase (44 ; 144) pour sélectionner un vecteur de phase approprié ($P\tilde{u}$) parmi une pluralité de vecteurs de phase disponibles à appliquer aux données devant être transmises, chaque dit vecteur de phase disponible comprenant une pluralité d'éléments de phase ($\Phi_0 \sim \Phi_{N-1}$) dont chacun correspond à une ou plusieurs desdites sous-porteuses et définit un réglage de phase devant être appliqué par l'émetteur à ladite (auxdites) sous-porteuse(s) correspondante(s) ;

**caractérisé en ce que** le moyen de sélection de vecteur de phase peut fonctionner au départ pour limiter la sélection du vecteur de phase approprié à la prise en compte, d'une manière parallèle, des vecteurs de phase appartenant à un premier ensemble des vecteurs de phase disponibles dans la pluralité de vecteurs de phase, et peut en outre fonctionner pour étendre la sélection à des vecteurs de phase supplémentaires en dehors dudit premier ensemble lorsqu'aucun vecteur de phase approprié n'est trouvé dans ledit premier ensemble.

18. Récepteur (150) conçu pour recevoir un signal multiporteuse (r) émis par un émetteur en utilisant une pluralité de sous-porteuses simultanément, l'émetteur ayant appliqué aux données devant être transmises un vecteur de phase (P$\tilde{u}$) sélectionné parmi une pluralité de vecteurs de phase disponibles, chaque dit vecteur de phase disponible comprenant une pluralité d'éléments de phase dont chacun correspond à une ou plusieurs desdites sous-porteuses et définit un réglage de phase appliqué par l'émetteur à ladite (auxdites) sous-porteuses(s) correspondante(s), ledit récepteur comprenant :

un moyen de traitement (152-162) pour traiter le signal multiporteuse reçu avec des vecteurs de phase d'essai d'une pluralité de vecteurs de phase d'essai pour récupérer lesdites données à partir du signal multiporteuse reçu, ladite pluralité de vecteurs de phase d'essai correspondant respectivement à la pluralité de vecteurs de phase disponibles de l'émetteur ;

**caractérisé par** :

un moyen de limitation pouvant fonctionner pour limiter le traitement par ledit moyen de traitement au départ à la prise en compte, d'une manière parallèle, des vecteurs de phase d'essai d'un premier ensemble de vecteurs de phase d'essai dans la pluralité de vecteurs de phase d'essai, et pouvant également fonctionner pour étendre le traitement à des vecteurs de phase supplémentaires en dehors dudit premier ensemble si une récupération de données satisfaisante n'est obtenue avec aucun des vecteurs de phase d'essai dudit premier ensemble.

19. Programme pour l'exécution par un processeur dans un émetteur (40 ; 140) conçu pour émettre des données vers un ou plusieurs récepteurs (50 ; 150) en utilisant une pluralité de sous-porteuses simultanément, le programme lorsqu'il est exécuté amenant l'émetteur à sélectionner (S4, S6, S8) un vecteur de phase approprié (P$\tilde{u}$) parmi une pluralité de vecteurs de phase disponibles à appliquer aux données devant être transmises, chaque dit vecteur de phase disponible comprenant une pluralité d'éléments de phase ($\Phi_0 \sim \Phi_{N-1}$) dont chacun correspond à une ou plusieurs desdites sous-porteuses et définit un réglage de phase devant être appliqué par l'émetteur à ladite (auxdites) sous-porteuse(s) correspondante(s) ;
**caractérisé en ce que** la sélection du vecteur de phase approprié (P$\tilde{u}$) est limitée au départ (S2, S3) à la prise en compte, d'une manière parallèle, des vecteurs de phase appartenant à un premier ensemble des vecteurs de phase disponibles dans la pluralité de vecteurs de phase, et la sélection est étendue (S7) à des vecteurs de phase supplémentaires en dehors dudit premier ensemble lorsqu'aucun vecteur de phase approprié n'est trouvé dans ledit premier ensemble (S6).

20. Programme pour l'exécution par un processeur dans un récepteur (50 ; 150) conçu pour recevoir un signal multiporteuse (r) émis par un émetteur (40 ; 140) en utilisant une pluralité de sous-porteuses simultanément, l'émetteur ayant appliqué aux données devant être transmises un vecteur de phase (P$\tilde{u}$) sélectionné parmi une pluralité de vecteurs de phase disponibles, chaque dit vecteur de phase disponible comprenant une pluralité d'éléments de phase dont chacun correspond à une ou plusieurs desdites sous-porteuses et définit un réglage de phase appliqué par l'émetteur à ladite (auxdites) sous-porteuse(s) correspondante(s), ledit programme lorsqu'il est exécuté amenant le récepteur à traiter le signal multiporteuse reçu avec des vecteurs de phase d'essai d'une pluralité de vecteurs de phase d'essai pour récupérer lesdites données à partir du signal multiporteuse reçu, ladite pluralité de vecteurs de phase d'essai correspondant respectivement à la pluralité de vecteurs de phase disponibles de l'émetteur ;
**caractérisé en ce que** le traitement est limité au départ à la prise en compte, d'une manière parallèle, des vecteurs de phase d'essai d'un premier ensemble de vecteurs de phase d'essai dans la pluralité de vecteurs de phase d'essai, et le traitement est étendu à des vecteurs de phase supplémentaires en dehors dudit premier ensemble si une récupération de données satisfaisante n'est obtenue avec aucun des vecteurs de phase d'essai dudit premier ensemble.

21. Station de base d'un système de communication sans fil comprenant l'émetteur selon la revendication 17 ou le récepteur selon la revendication 18.

22. Station mobile d'un système de communication sans fil comprenant l'émetteur selon la revendication 17 ou le récepteur selon la revendication 18.

Fig.1

EP 1 791 313 B1

BASE BAND RECEIVED SIGNAL

$r_n$

32 — N-POINT DFT UNIT

34 — CHANNEL ESTIMATION UNIT

$\hat{H}_n$

$36_1$ — $P_1^*$ — $\sum_{n=0}^{N-1} \min_{\hat{c}_n \in Q} \left| r_n e^{-j\phi_n^1} - H_n \hat{c}_n \right|^2$ — $38_1$

$36_2$ — $P_2^*$ — $\sum_{n=0}^{N-1} \min_{\hat{c}_n \in Q} \left| r_n e^{-j\phi_n^2} - H_n \hat{c}_n \right|^2$ — $38_2$

$36_U$ — $P_U^*$ — $\sum_{n=0}^{N-1} \min_{\hat{c}_n \in Q} \left| r_n e^{-j\phi_n^U} - H_n \hat{c}_n \right|^2$ — $38_U$

$\hat{H}_n$

40 — SELECTION UNIT

$\hat{c}_n$

Fig.2

Fig.3

START

RECEIVE BLOCK
OF DATA C — S1

INITIALISE LAYER
INDEX LI = 1 — S2

FOR SET [ LI ]
CALCULATE $C \otimes P_i$ — S3
FOR EACH PHASE
VECTOR IN THE SET

IDENTIFY THE PHASE
VECTOR $P_{\bar{u}}$ HAVING — S4
THE LOWEST PAPR

LI = 2
?  — S5

YES

NO

IS
THE PAPR
REDUCTION
ACHIEVED BY THE
IDENTIFIED PHASE — S6
VECTOR $P_{\bar{u}}$ ABOVE
A TARGET
THRESHOLD FOR
LAYER LI
?

NO

YES

LI = LI + 1 — S7

SELECT SET [ LI ] AND
$P_{\bar{u}}$ WITHIN SET [ LI ] — S8

END

*Fig.4*

*Fig.5*

Fig.6

Fig.7

Fig.8

*Fig.9*

Fig.10

EP 1 791 313 B1

Fig.11

Fig.12

LAYER 1 | LI |

LAYER 2 | LI | k |

*Fig.13 (A)*

LAYER 1 | LI | $\tilde{u}$ |

LAYER 2 | LI | $\tilde{u}$ |

*Fig.13 (B)*

LAYER 1 | LI | $\tilde{u}$ |

LAYER 2 | LI | k |

*Fig.13 (C)*

LAYER 1 | LI | $k_1$ |

LAYER 2 | LI | $k_2$ |

*Fig.13 (D)*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A blind SLM receiver for PAR-reduced OFDM. **A.D.S. JAYALATH ; C TELLAMBURA.** Proceedings of IEEE Vehicular Technology Conference. Vancouver, 24 September 2002, 218-222

- **BAXLEY R J et al.** Ordered phase sequence testing in SLM for improved blind detection. *The Sixth IEEE International Workshop on Signal Processing Advances in Wireless Communications,* 05 June 2005, 256-259